# EUROPEAN PATENT APPLICATION

(11) **EP 4 674 720 A1**
(43) Date of publication of application: **07.01.2026**
(21) Application number: 24769717.0
(22) Date of filing: 21.02.2024
(51) Int. Cl.: B60W 60/00, B60W 30/095

(54) **EVALUATION METHOD AND APPARATUS FOR EFFICIENT LANE-CHANGING CAPABILITY, AND STORAGE MEDIUM**

(30) Priority: 15.03.2023 CN 202310314807
(71) Applicant: Huawei Technologies Co., Ltd., Shenzhen, Guangdong 518129 (CN)
(72) Inventor: ZHANG, Yeqing, Shenzhen, Guangdong 518129 (CN); BAI, Guoku, Shenzhen, Guangdong 518129 (CN); CHEN, Anlin, Shenzhen, Guangdong 518129 (CN); CHENG, Siyuan, Shenzhen, Guangdong 518129 (CN); LI, Juncheng, Shenzhen, Guangdong 518129 (CN); SUN, Hao, Shenzhen, Guangdong 518129 (CN)
(74) Representative: Maiwald GmbH
(86) International application number: PCT/CN2024/077886
(87) International publication number: WO 2024/188022

(57) **Abstract**

A method and an apparatus for evaluating an efficient lane change capability, and a storage medium are provided. The method includes: determining traveling status information of a vehicle and traffic scenario information based on a vehicle traveling trajectory, a lane change decision instruction, road scenario information, and a real-time traffic flow status; calculating, in each lane change time period of a pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period; and/or calculating, in each non-lane-change time period of the pending evaluation time period based on the traveling status information of the vehicle and the traffic scenario information, a suppression loss evaluation value generated due to non-execution of a lane change action in each non-lane-change time period; and calculating an efficient lane change capability score based on a lane change effectiveness evaluation value and/or a suppression loss evaluation value in the pending evaluation time period.

## Description

This application claims priority to Chinese Patent Application No. 202310314807.1, filed with the China National Intellectual Property Administration on March 15, 2023 and entitled "METHOD AND APPARATUS FOR EVALUATING EFFICIENT LANE CHANGE CAPABILITY, AND STORAGE MEDIUM", which is incorporated herein by reference in its entirety.

### TECHNICAL FIELD

This application relates to the field of vehicle technologies, and in particular, to a method and an apparatus for evaluating an efficient lane change capability, and a storage medium.

### BACKGROUND

Currently, research on autonomous driving at home and abroad is gradually deepening. Many vehicles are provided with assisted driving functions that can implement automatic control over the vehicles, such as an automatic lane change. Actually, a lane change capability is particularly important for autonomous vehicles, and an overtaking/efficient lane change capability constitutes core competitiveness and a strategic feature of autonomous driving products in the industry, demonstrating a high intelligentization level of the autonomous driving products. Reasonableness and effectiveness of a behavior of overtaking or a lane change are crucial measurement indicators for reflecting intelligentization degrees of an autonomous vehicle and an assisted driving function.

However, because research on evaluation of a lane change capability of a vehicle is underdeveloped. Especially, in a highly dynamic and complex real-world traffic scenario, effectiveness evaluation of overtaking/an efficient lane change of the vehicle is susceptible to microscopic dynamic changes in traffic flow. Therefore, how to accurately and efficiently evaluate whether the overtaking/efficient lane change of the vehicle is reasonable and effective is still a technical problem to be urgently resolved in the art, and is also a key capability for promoting fast iteration and maturation of various efficient lane change algorithms and improving core competitiveness of autonomous driving products.

Currently, in a conventional technology, vehicle traveling data is first obtained to obtain vehicle information such as a lane change trajectory, a traveling speed, obstacle information, and a lane line; and then whether a lane change behavior is an unreasonable lane change/a redundant lane change/a lane change across a solid line/low-speed vehicle following without a lane change is determined based on a lane change position, a lane change direction, a distance between two consecutive lane change positions, an obstacle speed, a dashed or solid lane line, and the like. In this method, actual vehicle traveling data is used as an input, and reasonableness of the lane change behavior is determined according to a specified objective determining rule/a specified threshold. Therefore, a variety of common unreasonable lane change behaviors can be evaluated quickly and qualitatively. However, this solution is applicable to only a basic lane change behavior, for example, the lane change across a solid line and the low-speed vehicle following without a lane change, and cannot measure a highly intelligent lane change behavior. For example, it is difficult to use this solution to evaluate an overtaking/efficient lane change behavior that meets traffic regulations but has poor intelligent experience. In addition, this solution cannot accurately measure a gain/loss of the lane change behavior, and cannot accurately and quantitatively evaluate strength of a lane change capability. In addition, this solution can evaluate only a lane change behavior that can be extracted from a traveling trajectory, and is not applicable to a vehicle traveling behavior that cannot be completely extracted from an actual traveling trajectory, for example, a lane change intention jump and a lane change cancellation.

### SUMMARY

This application discloses a method and an apparatus for evaluating an efficient lane change capability, and a storage medium, to perform efficient, fast, and accurate quantitative evaluation on the efficient lane change capability. This application is applicable to both a simulation system and actual road driving, and is applicable to a lane change capability of both a human driving system and an intelligent driving system.

According to a first aspect, an embodiment of this application provides a method for evaluating an efficient lane change capability. The method may include: determining traveling status information of a vehicle and traffic scenario information in a pending evaluation time period based on a vehicle traveling trajectory, a lane change decision instruction, road scenario information, and a real-time traffic flow status; then, calculating, in each lane change time period of the pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period; and finally, calculating an efficient lane change capability score based on a lane change effectiveness evaluation value in the pending evaluation time period, where the lane change effectiveness evaluation value in the pending evaluation time period is obtained based on the lane change effectiveness evaluation value corresponding to the completed lane change behavior in each lane change time period.

In this embodiment of this application, the traveling status information of the vehicle and the traffic scenario information in the pending evaluation time period are determined based on the vehicle traveling trajectory, the lane change decision instruction, the road scenario information, and the real-time traffic flow status. Then, the lane change effectiveness evaluation value corresponding to the completed lane change behavior in each lane change time period is calculated in each lane change time period of the pending evaluation time period. Then, the efficient lane change capability score is calculated based on the lane change effectiveness evaluation value in the pending evaluation time period. In this manner, a lane change effectiveness evaluation value corresponding to a completed lane change behavior in the pending evaluation time period is quantitatively evaluated, to quantify an efficient lane change capability score. This enables more efficient, rapid, objective, and accurate measurement of whether an efficient lane change behavior of a human-driven vehicle or an autonomous vehicle is reasonable and effective, and avoids an excessively aggressive efficient lane change behavior of the vehicle that results in frequent lane change behaviors with small actual gains, so as to accurately describe a capability boundary and a minor version difference between different lane change algorithms, and promote rapid iteration and maturation of the lane change algorithm. In addition, intelligence of a lane change decision in a real-time high-dynamic traffic scenario is quantitatively evaluated, to promote efficient evaluation of an efficient lane change capability in the autonomous driving field.

In a possible implementation, the calculating, based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period includes: calculating, based on the traveling status information of the vehicle, the traffic scenario information, and the lane change intention corresponding to the lane change decision instruction, a lane change timing evaluation value corresponding to the completed lane change behavior in each lane change time period; then, calculating, based on the traveling status information of the vehicle, the traffic scenario information, and the lane change intention execution result, an actual gain obtained from the completed lane change behavior in each lane change time period; and finally, calculating, based on at least one of the lane change timing evaluation value corresponding to the completed lane change behavior in each lane change time period and the actual gain obtained from the completed lane change behavior in each lane change time period, the lane change effectiveness evaluation value corresponding to the completed lane change behavior in each lane change time period.

For an autonomous vehicle, if a lane change intention is generated too early, a lane change behavior can be executed after long waiting time, affecting driving experience. In addition, due to a real-time dynamic change in traffic flow, if the lane change intention is generated too early, the lane change intention is likely to be canceled, increasing a quantity of lane change intention jumps. If a lane change intention is generated too late, lane change waiting time is short, and consequently, space for performing a lane change action is small and a lane change is too urgent, even the lane change fails or the lane change action cannot be executed, affecting driving safety and comfort. In addition, if there are too many or too few lane change intentions, a lane change behavior of the vehicle is likely to be excessively radical or excessively conservative, affecting intelligence of a driving decision. Therefore, reasonableness of timing of a lane change intention is evaluated before the vehicle executes the lane change action. This allows for quantitative descriptions of reasonableness of timing of a lane change decision and aggressiveness of a driving style in a real-time high-dynamic traffic scenario, thereby contributing to enhancement of intelligence of a driving decision.

An actual gain obtained from the completed lane change behavior is relative to that of a non-lane-change behavior. If the gain is a positive value, a lane change currently performed by the vehicle is an effective lane change behavior. If the gain is a negative value, a lane change currently performed by the vehicle is an ineffective/inappropriate lane change behavior. The gain may be, for example, a speed gain and/or a position gain. The speed gain is a steady-state speed increment relative to a non-lane-change behavior. The position gain is an actual position advance relative to a non-lane-change behavior.

In this manner, whether a single lane change obtains an efficiency gain and a value of the gain are evaluated, to convert an efficient lane change behavior of the vehicle into a continuous, quantitative, positive, or negative lane change gain evaluation value. In this way, lane change effectiveness is easy to be quantified and calculated, and evaluation of an efficient lane change capability can be numerically described and compared, so that a capability boundary and a subtle version difference between different lane change algorithms are accurately described. In addition, based on positive and negative gains obtained from the completed lane change behavior, forward and reverse scenario data can be extracted in a targeted manner for performance analysis and targeted improvement of the lane change algorithm, to promote rapid iteration and maturation of the lane change algorithm.

In a possible implementation, the calculating, based on the traveling status information of the vehicle, the traffic scenario information, and the lane change intention execution result, an actual gain obtained from the completed lane change behavior in each lane change time period includes: calculating, based on the traveling status information of the vehicle, the traffic scenario information, the lane change intention execution result, and respective traveling statuses of a first reference vehicle and a second reference vehicle at a lane change end moment, the actual gain obtained by the vehicle from the completed lane change behavior in each lane change time period, where the first reference vehicle includes sequential preceding and trailing vehicles of the vehicle at a lane change start moment, and the second reference vehicle includes sequential preceding and trailing vehicles of the vehicle at the lane change end moment.

In this solution, the following method is defined as an anchoring vehicle-following model method: It is assumed that a to-be-evaluated vehicle and sequential preceding and trailing vehicles of the vehicle can reach a stable traveling status at a lane change end moment, where the lane change end moment may also be a moment after specific duration since a lane change ends. An identifier (Identifier, ID) of a 1^{st} vehicle in front of the to-be-evaluated vehicle at a lane change start moment is anchored and the 1^{st} vehicle is denoted as an original preceding vehicle. The original preceding vehicle is searched for from the sequential preceding and trailing vehicles in an original lane at the lane change end moment, and a traveling status of the original preceding vehicle is obtained and denoted as an end status of the original preceding vehicle, where the traveling status is a traveling status of the vehicle present when the vehicle travels stably, and includes a steady-state speed, a position, and the like. In this case, a traveling speed of the to-be-evaluated vehicle in a non-lane-change case may be equivalent to a minimum value of a steady-state speed, a lane speed limit, and a maximum traveling speed of the to-be-evaluated vehicle at the end status of the original preceding vehicle; and a position of the to-be-evaluated vehicle in a non-lane-change case may be equivalent to a position x meters behind a position of the vehicle at the end status of the original preceding vehicle, where x indicates a stable vehicle-following interval for the to-be-evaluated vehicle. In addition, an ID of a 1^{st} vehicle in front of the to-be-evaluated vehicle at the lane change end moment is anchored, the 1^{st} vehicle is denoted as a new preceding vehicle, and a traveling status of the new preceding vehicle is obtained and denoted as an end status of the new preceding vehicle. In this case, a traveling speed of the to-be-evaluated vehicle after the lane change may be equivalent to a minimum value of a steady-state speed, a lane speed limit, and a maximum traveling speed of the to-be-evaluated vehicle at the end status of the new preceding vehicle; and a position of the to-be-evaluated vehicle after the lane change may be equivalent to a position x meters behind a position of the vehicle at the end status of the new preceding vehicle. Therefore, the end status of the original preceding vehicle can be compared with the end status of the new preceding vehicle to obtain an actual speed and/or position gain/loss of a lane change case/the non-lane-change case. If the original preceding vehicle also executes a lane change behavior in the time period, an i^{th} vehicle in front of the to-be-evaluated vehicle is anchored and denoted as an original preceding vehicle, where i indicates a vehicle that is in the sequential preceding vehicles of the to-be-evaluated vehicle and that is closest to the to-be-evaluated vehicle and does not execute the lane change behavior. If there are no sequential preceding vehicles of the to-be-evaluated vehicle or all sequential preceding vehicles of the to-be-evaluated vehicle execute the lane change behavior, sequential trailing vehicles of the to-be-evaluated vehicle may be anchored in a similar way. Then, the anchoring vehicle-following model method is used to calculate an actual gain obtained from a lane change behavior.

According to the anchoring vehicle-following model method, a lane change time period is considered as a complete lane decision process, and steady-state traveling statuses of a vehicle at a lane change start moment and a lane change end moment are used to calculate an actual gain for posteriori evaluation, where the actual gain is obtained from an efficient lane change behavior. In this way, evaluation data is easily collected and impact of a traffic scenario is fully considered. This avoids microscopic impact of a real-time dynamic change in traffic flow in the time period on an evaluation result, making the evaluation result of this solution more macroscopic, more accurate, and more universal. The method may be used to quantitatively evaluate intelligence of a lane change decision in real-time high-dynamic traffic scenario.

In a possible implementation, the method further includes: determining a proportion of effective lane changes in the pending evaluation time period based on a quantity and directions of all completed lane change behaviors in the pending evaluation time period, and an actual gain obtained; and then calculating the lane change effectiveness evaluation value in the pending evaluation time period based on the proportion of effective lane changes and the lane change effectiveness evaluation value corresponding to the completed lane change behavior in each lane change time period.

The directions of the completed lane change behaviors may be understood as directions of completed lane change behaviors that occur in a time sequence in the pending evaluation time period, and are used to consider impact between two consecutive completed lane change behaviors in a time sequence. For example, two consecutive lane changes in a same direction in very short time may cause traffic violation or poor driving experience; and two consecutive lane changes in opposite directions in very short time without overtaking a preceding vehicle in an original lane are considered as a redundant lane change behavior or an ineffective lane change behavior. The actual gain obtained may be, for example, a speed gain, a position gain, or a speed gain and a position gain.

The proportion of effective lane changes in the pending evaluation time period represents a proportion of efficient lane change behaviors whose actual gains are positive values in the pending evaluation time period in all lane change intentions generated by a lane change decision system, and may reflect reasonableness of an intention of the lane change decision system and a success rate of executing the lane change behavior.

The lane change effectiveness evaluation value in the pending evaluation time period is calculated based on the lane change effectiveness evaluation value corresponding to the completed lane change behavior in each lane change time period and the proportion of effective lane changes in the pending evaluation time period that are obtained through calculation. In this way, gains of all lane change behaviors of the vehicle in the pending evaluation time period may be described, to describe an overall level of lane change behavior execution in an efficient lane change capability of the vehicle. For example, a higher proportion of effective lane changes in the pending evaluation time period indicates a higher proportion of lane change behaviors whose gains reach a preset gain threshold, namely, a larger quantity of times of reasonable and effective lane change behaviors executed in all completed lane change behaviors. A larger lane change effectiveness evaluation value corresponding to the completed lane change behavior in each lane change time period indicates a larger efficiency gain obtained from a single lane change, and a higher level of performing the lane change behavior. Therefore, a larger lane change effectiveness evaluation value in the pending evaluation time period indicates that the lane change behavior of the vehicle is executed accurately and well, and an efficient lane change capability of the vehicle is stronger.

In a possible implementation, the efficient lane change capability score is obtained based on the lane change effectiveness evaluation value and at least one of an overall lane change efficiency evaluation value, a suppression loss evaluation value, an atypical lane change evaluation value, a topology constraint evaluation value, and a traffic scenario evaluation value in the pending evaluation time period. The overall lane change efficiency evaluation value represents an average traveling speed and a lane change execution frequency of the vehicle in the pending evaluation time period. The suppression loss evaluation value represents a loss value corresponding to a non-lane-change behavior of the vehicle. The atypical lane change evaluation value includes an evaluation value corresponding to at least one of a lane change intention jump, a lane change failure, back-and-forth lane changes, and consecutive lane changes in a same direction. The topology constraint evaluation value represents an evaluation value corresponding to at least one of a lane change in violation of a traffic regulation and a lane change that results in a departure from a navigation lane. The traffic scenario evaluation value represents an evaluation value corresponding to the traffic scenario information.

The efficient lane change capability score is used to quantitatively evaluate the vehicle's ability to choose reasonable and appropriate timing for performing a lane change behavior, and may be further used to compare and grade different versions of lane change algorithms. A higher efficient lane change capability score indicates higher intelligence of an efficient lane change behavior of the vehicle, better driving experience, and more obvious improvement of overall traveling efficiency of the vehicle in the pending evaluation time period.

In this example, the efficient lane change capability score may be obtained based on the lane change effectiveness evaluation value and at least one of the overall lane change efficiency evaluation value, the suppression loss evaluation value, the atypical lane change evaluation value, the topology constraint evaluation value, and the traffic scenario evaluation value. Traveling status information of the vehicle in a time period is obtained based on a vehicle traveling trajectory, a lane change decision instruction, road scenario information, and a real-time traffic flow status in real-time collection data, and an efficient lane change capability score is obtained through measurement from the perspectives of reasonableness of timing of a lane change intention, a quantity of uncompleted lane change behaviors, an actual efficiency gain from a lane change, a low-speed suppression efficiency loss, traffic compliance, and navigation compliance and through comprehensive scoring, so that a more detailed and comprehensive multi-dimensional performance evaluation report may be further output. This can implement lane change capability evaluation of a driving lane change algorithm such as human driving, an expert system, supervised learning, and reinforcement learning, improve version iteration efficiency, measure intelligence and driving experience of the efficient lane change capability of the vehicle, and promote efficient evaluation of the efficient lane change capability in the automatic driving field. For example, capability boundaries, advantages, and disadvantages of different algorithms are accurately and quantitatively evaluated based on the efficient lane change capability score and the detailed evaluation report that are output, to distinguish subtle differences between the different algorithms and quickly explore the capability boundaries of the lane change algorithms. In addition, during evaluation, based on the detailed evaluation report of the lane change algorithms, forward and reverse lane change data (such as data with a small lane change gain and data in a long-suppression time period) in a corresponding scenario can be extracted in a targeted manner for performance analysis and targeted improvement of the lane change algorithms, to promote rapid iteration and maturation of the lane change algorithms.

In a possible implementation, the pending evaluation time period further includes a non-lane-change time period. The method further includes: calculating, in each non-lane-change time period of the pending evaluation time period based on the traveling status information of the vehicle and the traffic scenario information, a suppression loss evaluation value generated due to non-execution of a lane change action in each non-lane-change time period; and then obtaining the suppression loss evaluation value in the pending evaluation time period based on the suppression loss evaluation value generated due to non-execution of the lane change action in each non-lane-change time period.

The suppression loss evaluation value represents a loss value corresponding to a non-lane-change behavior of the vehicle in a scenario in which a lane change condition is met and a significant speed gain or a significant position gain can be obtained after a lane change is performed.

In this manner, the suppression loss evaluation value generated due to non-execution of the lane change action in the pending evaluation time period is quantitatively evaluated, to quantify the efficient lane change capability score. This enables more efficient, rapid, objective, and accurate measurement of whether an efficient lane change behavior of a human-driven vehicle or an autonomous vehicle is reasonable and effective, and avoids an excessively conservative efficient lane change behavior of the vehicle that results in infrequent lane change behaviors and long-time low-speed suppression, so as to accurately describe a capability boundary and a minor version difference between different lane change algorithms, and promote rapid iteration and maturation of the lane change algorithm. In addition, intelligence of a lane change decision in a real-time high-dynamic traffic scenario is quantitatively evaluated, to promote efficient evaluation of an efficient lane change capability in the autonomous driving field.

Both the lane change time period and the non-lane-change time period may be considered as a complete lane decision process, and the lane change time period and the non-lane-change time period can cover an entire pending evaluation time period in all scenarios. Therefore, this solution may be applied to evaluation of lane change behaviors and non-lane-change behaviors in all scenarios. Specifically, the efficient lane change capability of the vehicle may be comprehensively evaluated in terms of execution of an effective lane change behavior and suppression of an inappropriate lane change behavior, so that all efficient lane change behaviors are executed with reasonable timing and yield significant gains, and lane change behaviors are less, good, fast, and accurate.

In a possible implementation, the calculating, based on the traveling status information of the vehicle and the traffic scenario information, a suppression loss evaluation value generated due to non-execution of a lane change action in each non-lane-change time period includes: obtaining, through calculation, the suppression loss value of the (to-be-evaluated) vehicle in each non-lane-change time period based on the traveling status information of the (to-be-evaluated) vehicle, the traffic scenario information, and traveling status information of a third reference vehicle and a fourth reference vehicle, where the third reference vehicle includes sequential preceding and trailing vehicles of the (to-be-evaluated) vehicle in a first reference lane, the first reference lane is a lane in which the (to-be-evaluated) vehicle is located, the fourth reference vehicle includes sequential preceding and trailing vehicles relative to a position that is in a second reference lane and that corresponds to the (to-be-evaluated) vehicle, the second reference lane is a lane to which the (to-be-evaluated) vehicle is changeable, and the corresponding position is a position that is in the second reference lane and that corresponds to a position of the (to-be-evaluated) vehicle; then calculating a long-time suppression loss value in each non-lane-change time period based on the suppression loss value in each non-lane-change time period and duration of each non-lane-change time period of the pending evaluation time period; calculating a proportion of suppression duration in each non-lane-change time period based on the duration of each non-lane-change time period, a control frequency of the lane change decision instruction, and the suppression loss value, where the proportion of suppression duration represents a conservative degree of a lane change; and finally, calculating, based on at least one of the suppression loss value in each non-lane-change time period, the long-time suppression loss value, and the proportion of suppression duration, the suppression loss evaluation value generated due to non-execution of the lane change action in each non-lane-change time period.

In this example, according to the anchoring vehicle-following model method, a non-lane-change time period is also considered as a plurality of complete lane decision processes, and a steady-state traveling status of a vehicle in the non-lane-change time period is used to calculate a low-speed suppression loss for posteriori evaluation, where the low-speed suppression loss is generated due to non-execution of a lane change action. In this way, evaluation data is easily collected and impact of a traffic scenario is fully considered. This avoids microscopic impact of a real-time dynamic change in traffic flow in the time period on an evaluation result, making the evaluation result of this solution more macroscopic, more accurate, and more universal. The method may be used to quantitatively evaluate intelligence of a lane change decision in real-time high-dynamic traffic scenario.

The long-time suppression loss value is a suppression severity statistically collected based on consecutive suppression duration. The loss value includes impact of suppression time on driving experience, reflects impact of the low-speed suppression loss generated due to non-execution of the lane change action, and can be used to effectively and quantitatively evaluate a conservative degree and an aggressive degree of a lane change behavior of the vehicle. For example, longer low-speed suppression time generated due to non-execution of the lane change action indicates a larger low-speed suppression loss, and a larger long-time suppression loss value indicates poorer intelligence of an efficient lane change and poorer driving experience. The proportion of suppression duration may also be referred to as a proportion of suppression frames, and may be represented as a percentage, of a quantity of low-speed suppression frames included in each non-lane-change time period, in a total quantity of valid frames of all lane change decision instruction control frames in the entire non-lane-change time period. The proportion of suppression duration may describe an overall suppression status of the vehicle under the action of a lane change algorithm to be evaluated, namely, a conservative degree of a lane change.

In this manner, suppression duration and a suppression loss value of each suppression time period generated due to non-execution of the lane change action are evaluated, so that an efficient lane change capability of the vehicle without performing the lane change action is converted into a cumulative and quantized suppression loss evaluation value. In this way, reasonableness of the non-lane-change case is easy to be quantified and calculated, and evaluation of the efficient lane change capability may also be numerically described and compared, to accurately describe a capability boundary and a minor version difference between different lane change algorithms. In addition, forward/reverse scenario data can be extracted in a targeted manner based on the suppression duration and the suppression loss value generated due to non-execution of the lane change action. The extracted data is used for performance analysis and targeted improvement of the lane change algorithm, to promote fast iteration and maturation of the lane change algorithm.

In a possible implementation, the obtaining the suppression loss evaluation value in the pending evaluation time period based on the suppression loss evaluation value generated due to non-execution of the lane change action in each non-lane-change time period includes: obtaining a proportion of suppression duration in the pending evaluation time period based on the proportion of suppression duration in each non-lane-change time period; and then calculating the suppression loss evaluation value in the pending evaluation time period based on the suppression loss evaluation value generated due to non-execution of the lane change action in each non-lane-change time period and the proportion of suppression duration in the pending evaluation time period.

The proportion of suppression duration in the pending evaluation time period may also be referred to as a proportion of suppression frames, and may be represented as a percentage, of a total quantity of low-speed suppression frames in all lane change decision instruction control frames included in the pending evaluation time period, in a total quantity of valid frames in an entire pending evaluation time period. The proportion of suppression duration is related to the proportion of suppression duration in each non-lane-change time period and a proportion of total duration in all non-lane-change time periods of the pending evaluation time period, and may describe an overall suppression status of the vehicle under the action of a lane change algorithm to be evaluated, namely, a conservative degree of a lane change.

The suppression loss evaluation value in the pending evaluation time period is calculated based on the suppression loss evaluation value generated due to non-execution of the lane change action in each non-lane-change time period and the proportion of suppression duration in the pending evaluation time period, where the suppression loss evaluation value and the proportion of suppression duration are obtained through calculation. In this way, a low-speed suppression loss of the vehicle in all non-lane-change time periods of the pending evaluation time period may be described, to describe an overall level of performing a non-lane-change behavior in the efficient lane change capability of the vehicle. For example, a larger proportion of suppression duration in the pending evaluation time period indicates longer time of a speed or position loss generated when a lane change behavior is not performed due to suppression from a slow vehicle ahead, that is, fewer reasonable and effective non-lane-change behaviors in all non-lane-change behaviors; and a larger suppression loss evaluation value generated due to non-execution of the lane change action in each non-lane-change time period indicates a larger efficiency loss caused by a single non-lane-change behavior, and a more conservative lane change behavior. Therefore, a smaller suppression loss evaluation value in the pending evaluation time period indicates less and faster of lane change behaviors of the vehicle and a stronger efficient lane change capability of the vehicle.

In a possible implementation, the method further includes: determining an atypical lane change evaluation value in each lane change time period of the pending evaluation time period based on the traveling status information of the vehicle, the lane change intention corresponding to the lane change decision instruction, lane change behavior information that no lane change action is generated or a lane change action exists but is not completed corresponding to the lane change intention execution result, information that two consecutive lane change behaviors in the pending evaluation time period are in a same direction or in opposite directions, and information about a time interval and/or a distance interval between the two consecutive lane change behaviors.

An atypical lane change behavior may be understood as at least one of a lane change behavior corresponding to an ineffective lane change intention and a lane change behavior corresponding to a lane change failure. For example, the atypical lane change behavior includes a lane change corresponding to at least one of a lane change intention jump, a lane change failure, back-and-forth lane changes, and consecutive lane changes in a same direction.

The atypical lane change evaluation value includes an evaluation value corresponding to at least one of a lane change intention jump, a lane change failure, back-and-forth lane changes, and consecutive lane changes in a same direction.

The information about the time interval between the two consecutive lane change behaviors may be corresponding duration from an end moment of a previous lane change to a start moment of a next lane change in the two consecutive lane change behaviors. The information about the distance interval between the two consecutive lane change behaviors may be a corresponding distance from an end moment of a previous lane change to a start moment of a next lane change in the two consecutive lane change behaviors. Based on the obtained traveling status information of the vehicle and the lane change intention corresponding to the lane change decision instruction, statistics are collected on a case in which no corresponding lane change behavior is generated or a generated lane change behavior is not completed in a high-dynamic traffic scenario, to evaluate a lane change behavior with an incomplete trajectory such as an ineffective intention/the intention jump, a lane change cancellation, or the lane change failure. Based on a plurality of continuous lane change behaviors completed by the vehicle, a time interval between the lane change behaviors, and a distance interval between the lane change behaviors, statistics are collected on a coupled lane change behavior such as consecutive lane changes in a same direction and back-and-forth lane changes in opposite directions.

The atypical lane change behaviors can affect intelligence evaluation of a lane change capability of the vehicle and driving experience of an autonomous driving system. Therefore, a statistical result of such a non-best-experience lane change behavior also affects the efficient lane change capability score. In addition, the statistical result of this type of lane change behavior also constitutes a part of the capability boundary of the lane change algorithm, and is used by the lane change algorithm to improve a capability in a corresponding scenario in a targeted manner.

In a possible implementation, the method further includes: calculating the overall lane change efficiency evaluation value based on a total traveling distance, total traveling time, and a total quantity of lane changes of the vehicle in a total lane change time period of the pending evaluation time period.

The overall lane change efficiency evaluation value represents an average traveling speed and a lane change execution frequency of the vehicle in the pending evaluation time period. The lane change execution frequency may be understood as a quantity of lane change behaviors executed in unit time. Alternatively, the lane change execution frequency may be understood as a quantity of lane change behaviors executed in a unit traveling distance, or the like.

In this example, overall traffic efficiency of the vehicle in the evaluation time period can be obtained based on the average traveling speed, the lane change execution frequency, and the like in the pending evaluation time period that are reflected by the overall lane change efficiency evaluation value. This most directly reflects strength of an efficient lane change capability from a macro perspective without a need to consider microscopic impact of a real-time dynamic change in traffic flow in the pending evaluation time period on an evaluation result, thereby improving universality and applicability of this solution, and enabling a simple, efficient, and rapid quantitative evaluation of an efficient lane change capability in real-time high-dynamic traffic scenario.

In a possible implementation, the method further includes: calculating the topology constraint evaluation value based on at least one of information that the vehicle departs from a navigation lane, information about a lane change across a solid line, and information about occupation of a dedicated lane.

The topology constraint evaluation value represents an evaluation value corresponding to at least one of a lane change in violation of a traffic regulation, a lane change that results in a departure from a navigation lane, and the like.

In this example, compliance of the efficient lane change behavior with a traffic regulation and a navigation target may be considered during quantitative evaluation of the efficient lane change capability, to prevent lane change behaviors that violate traffic regulations and deviate from navigation targets, and similar actions from occurring in the pursuit of improving overall efficient lane change performance, which could lead to poor driving experience. This further ensures, from the perspective of traffic regulation and navigation compliance, that all efficient lane change behaviors are executed with reasonable timing and yield significant gains.

In a possible example, overall traveling efficiency of the vehicle in an evaluation time period is first obtained based on an average traveling speed, a lane change execution frequency, and the like in the evaluation time period; and then advantages and disadvantages of an efficient lane change behavior are measured based on aspects such as reasonableness of timing of an intention, reasonableness of a lane change direction, an actual gain, traffic regulation compliance, and navigation compliance of the efficient lane change behavior. In addition, advantages and disadvantages of a non-lane-change decision are measured based on aspects such as a low-speed suppression loss, an intention jump, a lane change failure, and the like in a non-lane-change time period of the evaluation time period, to evaluate the efficient lane change capability of the vehicle. A higher average traveling speed, a lower lane change execution frequency, more appropriate intention timing, a more reasonable lane change direction, a higher lane change behavior gain, better traffic regulation and navigation compliance, a smaller low-speed suppression loss of a non-lane-change behavior, and fewer intention jumps and lane change failures indicate fewer, better, faster, and more accurate lane change behaviors of the vehicle, and a stronger efficient lane change capability of the vehicle. Therefore, this solution measures and evaluates the efficient lane change capability from a plurality of dimensions, to enable complete, fast, accurate, and quantitative descriptions of a capability boundary and a minor version difference between lane change algorithms, and quantitative evaluation of intelligence of a lane change decision in real-time high-dynamic traffic scenario. This helps improve an efficient lane change capability of the lane change algorithm in a corresponding scenario in a targeted manner, promote fast iteration and maturation of the lane change algorithm, and resolve an efficient evaluation problem of an advanced efficient lane change capacity in the autonomous driving field.

According to a second aspect, an embodiment of this application provides a method for evaluating an efficient lane change capability. The method includes: determining traveling status information of a vehicle and traffic scenario information in a pending evaluation time period based on a vehicle traveling trajectory, a lane change decision instruction, road scenario information, and a real-time traffic flow status; then calculating, in each non-lane-change time period of the pending evaluation time period based on the traveling status information of the vehicle and the traffic scenario information, a suppression loss evaluation value generated due to non-execution of a lane change action in each non-lane-change time period, where the suppression loss evaluation value represents a loss value corresponding to a non-lane-change behavior of the vehicle; and finally calculating an efficient lane change capability score based on a suppression loss evaluation value in the pending evaluation time period, where the suppression loss evaluation value in the pending evaluation time period is obtained based on the suppression loss evaluation value generated due to non-execution of the lane change action in each non-lane-change time period.

In this embodiment of this application, the traveling status information of the vehicle and the traffic scenario information in the pending evaluation time period are determined based on the vehicle traveling trajectory, the lane change decision instruction, the road scenario information, and the real-time traffic flow status. Then, in each non-lane-change time period of the pending evaluation time period, the suppression loss evaluation value in each non-lane-change time period that is generated due to non-execution of a lane change action is calculated. Then, the efficient lane change capability score is calculated based on the suppression loss evaluation value in the pending evaluation time period. The suppression loss evaluation value represents a loss value corresponding to a non-lane-change behavior of the vehicle in a scenario in which a lane change condition is met and a significant speed gain or a significant position gain can be obtained after a lane change is performed. In this manner, the suppression loss evaluation value generated due to non-execution of the lane change action in the pending evaluation time period is quantitatively evaluated, to quantify the efficient lane change capability score. This enables more efficient, rapid, objective, and accurate measurement of whether an efficient lane change behavior of a human-driven vehicle or an autonomous vehicle is reasonable and effective, and avoids an excessively conservative efficient lane change behavior of the vehicle that results in infrequent lane change behaviors and long-time low-speed suppression, so as to accurately describe a capability boundary and a minor version difference between different lane change algorithms, and promote rapid iteration and maturation of the lane change algorithm. In addition, intelligence of a lane change decision in a real-time high-dynamic traffic scenario is quantitatively evaluated, to promote efficient evaluation of an efficient lane change capability in the autonomous driving field.

In a possible implementation, the calculating, based on the traveling status information of the vehicle and the traffic scenario information, a suppression loss evaluation value generated due to non-execution of a lane change action in each non-lane-change time period includes: obtaining, through calculation, the suppression loss value of the (to-be-evaluated) vehicle in each non-lane-change time period based on the traveling status information of the (to-be-evaluated) vehicle, the traffic scenario information, and traveling status information of a third reference vehicle and a fourth reference vehicle, where the third reference vehicle includes sequential preceding and trailing vehicles of the (to-be-evaluated) vehicle in a first reference lane, the first reference lane is a lane in which the (to-be-evaluated) vehicle is located, the fourth reference vehicle includes sequential preceding and trailing vehicles relative to a position that is in a second reference lane and that corresponds to the (to-be-evaluated) vehicle, the second reference lane is a lane to which the (to-be-evaluated) vehicle is changeable, and the corresponding position is a position that is in the second reference lane and that corresponds to a position of the (to-be-evaluated) vehicle; then calculating a long-time suppression loss value in each non-lane-change time period based on the suppression loss value in each non-lane-change time period and duration of each non-lane-change time period of the pending evaluation time period; calculating a proportion of suppression duration in each non-lane-change time period based on the duration of each non-lane-change time period, a control frequency of the lane change decision instruction, and the suppression loss value, where the proportion of suppression duration represents a conservative degree of a lane change; and finally, calculating, based on at least one of the suppression loss value in each non-lane-change time period, the long-time suppression loss value, and the proportion of suppression duration, the suppression loss evaluation value generated due to non-execution of the lane change action in each non-lane-change time period.

In this example, according to the anchoring vehicle-following model method, a non-lane-change time period is also considered as a plurality of complete lane decision processes, and a steady-state traveling status of a vehicle in the non-lane-change time period is used to calculate a low-speed suppression loss for posteriori evaluation, where the low-speed suppression loss is generated due to non-execution of a lane change action. In this way, evaluation data is easily collected and impact of a traffic scenario is fully considered. This avoids microscopic impact of a real-time dynamic change in traffic flow in the time period on an evaluation result, making the evaluation result of this solution more macroscopic, more accurate, and more universal. The method may be used to quantitatively evaluate intelligence of a lane change decision in real-time high-dynamic traffic scenario.

The long-time suppression loss value is a suppression severity statistically collected based on consecutive suppression duration. The loss value includes impact of suppression time on driving experience, reflects impact of the low-speed suppression loss generated due to non-execution of the lane change action, and can be used to effectively and quantitatively evaluate a conservative degree and an aggressive degree of a lane change behavior of the vehicle. For example, longer low-speed suppression time generated due to non-execution of the lane change action indicates a larger low-speed suppression loss, and a larger long-time suppression loss value indicates poorer intelligence of an efficient lane change and poorer driving experience. The proportion of suppression duration may also be referred to as a proportion of suppression frames, and may be represented as a percentage, of a quantity of low-speed suppression frames included in each non-lane-change time period, in a total quantity of valid frames of all lane change decision instruction control frames in the entire non-lane-change time period. The proportion of suppression duration may describe an overall suppression status of the vehicle under the action of a lane change algorithm to be evaluated, namely, a conservative degree of a lane change.

In this manner, suppression duration and a suppression loss value of each suppression time period generated due to non-execution of the lane change action are evaluated, so that an efficient lane change capability of the vehicle without performing the lane change action is converted into a cumulative and quantized suppression loss evaluation value. In this way, reasonableness of the non-lane-change case is easy to be quantified and calculated, and evaluation of the efficient lane change capability may also be numerically described and compared, to accurately describe a capability boundary and a minor version difference between different lane change algorithms. In addition, forward/reverse scenario data can be extracted in a targeted manner based on the suppression duration and the suppression loss value generated due to non-execution of the lane change action. The extracted data is used for performance analysis and targeted improvement of the lane change algorithm, to promote fast iteration and maturation of the lane change algorithm.

In a possible implementation, the method further includes: obtaining a proportion of suppression duration in the pending evaluation time period based on the proportion of suppression duration in each non-lane-change time period; and calculating the suppression loss evaluation value in the pending evaluation time period based on the suppression loss evaluation value generated due to non-execution of the lane change action in each non-lane-change time period and the proportion of suppression duration in the pending evaluation time period.

The proportion of suppression duration in the pending evaluation time period may also be referred to as a proportion of suppression frames, and may be represented as a percentage, of a total quantity of low-speed suppression frames in all lane change decision instruction control frames included in the pending evaluation time period, in a total quantity of valid frames in an entire pending evaluation time period. The proportion of suppression duration is related to the proportion of suppression duration in each non-lane-change time period and a proportion of total duration in all non-lane-change time periods of the pending evaluation time period, and may describe an overall suppression status of the vehicle under the action of a lane change algorithm to be evaluated, namely, a conservative degree of a lane change.

The suppression loss evaluation value in the pending evaluation time period is calculated based on the suppression loss evaluation value generated due to non-execution of the lane change action in each non-lane-change time period and the proportion of suppression duration in the pending evaluation time period, where the suppression loss evaluation value and the proportion of suppression duration are obtained through calculation. In this way, a low-speed suppression loss of the vehicle in all non-lane-change time periods of the pending evaluation time period may be described, to describe an overall level of performing a non-lane-change behavior in the efficient lane change capability of the vehicle. For example, a larger proportion of suppression duration in the pending evaluation time period indicates longer time of a speed or position loss generated when a lane change behavior is not performed due to suppression from a slow vehicle ahead, that is, fewer reasonable and effective non-lane-change behaviors in all non-lane-change behaviors; and a larger suppression loss evaluation value generated due to non-execution of the lane change action in each non-lane-change time period indicates a larger efficiency loss caused by a single non-lane-change behavior, and a more conservative lane change behavior. Therefore, a smaller suppression loss evaluation value in the pending evaluation time period indicates less and faster of lane change behaviors of the vehicle and a stronger efficient lane change capability of the vehicle.

In a possible implementation, the efficient lane change capability score is obtained based on the suppression loss evaluation value and at least one of an overall lane change efficiency evaluation value, a lane change effectiveness evaluation value, an atypical lane change evaluation value, a topology constraint evaluation value, and a traffic scenario evaluation value in the pending evaluation time period. The overall lane change efficiency evaluation value represents an average traveling speed and a lane change execution frequency of the vehicle in the pending evaluation time period. The atypical lane change evaluation value includes an evaluation value corresponding to at least one of a lane change intention jump, a lane change failure, back-and-forth lane changes, and consecutive lane changes in a same direction. The topology constraint evaluation value represents an evaluation value corresponding to at least one of a lane change in violation of a traffic regulation and a lane change that results in a departure from a navigation lane. The traffic scenario evaluation value represents an evaluation value corresponding to the traffic scenario information.

The efficient lane change capability score is used to quantitatively evaluate the vehicle's ability to choose reasonable and appropriate timing for performing a lane change behavior, and may be further used to compare and grade different versions of lane change algorithms. A higher efficient lane change capability score indicates higher intelligence of an efficient lane change behavior of the vehicle, better driving experience, and more obvious improvement of overall traveling efficiency of the vehicle in the pending evaluation time period.

In this example, the efficient lane change capability score may be obtained based on the suppression loss evaluation value and at least one of the overall lane change efficiency evaluation value, the lane change effectiveness evaluation value, the atypical lane change evaluation value, the topology constraint evaluation value, and the traffic scenario evaluation value in the pending evaluation time period. Traveling status information of the vehicle in a time period is obtained based on a vehicle traveling trajectory, a lane change decision instruction, road scenario information, and a real-time traffic flow status in real-time collection data, and an efficient lane change capability score is obtained through measurement from the perspectives of reasonableness of timing of a lane change intention, a quantity of uncompleted lane change behaviors, an actual efficiency gain from a lane change, a low-speed suppression efficiency loss, traffic compliance, and navigation compliance and through comprehensive scoring, so that a more detailed and comprehensive multi-dimensional performance evaluation report may be further output. This can implement lane change capability evaluation of a driving lane change algorithm such as human driving, an expert system, supervised learning, and reinforcement learning, improve version iteration efficiency, measure intelligence and driving experience of the efficient lane change capability of the vehicle, and promote efficient evaluation of the efficient lane change capability in the automatic driving field. For example, capability boundaries, advantages, and disadvantages of different algorithms are accurately and quantitatively evaluated based on the efficient lane change capability score and the detailed evaluation report that are output, to distinguish subtle differences between the different algorithms and quickly explore the capability boundaries of the lane change algorithms. In addition, during evaluation, based on the detailed evaluation report of the lane change algorithms, forward and reverse lane change data (such as data with a small lane change gain and data in a long-suppression time period) in a corresponding scenario can be extracted in a targeted manner for performance analysis and targeted improvement of the lane change algorithms, to promote rapid iteration and maturation of the lane change algorithms.

In a possible implementation, the pending evaluation time period further includes each lane change time period. The method further includes: calculating, in each lane change time period of the pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period; and obtaining a lane change effectiveness evaluation value in the pending evaluation time period based on the lane change effectiveness evaluation value corresponding to the completed lane change behavior in each lane change time period.

In this manner, a lane change effectiveness evaluation value corresponding to a completed lane change behavior in the pending evaluation time period is quantitatively evaluated, to quantify an efficient lane change capability score. This enables more efficient, rapid, objective, and accurate measurement of whether an efficient lane change of a human-driven vehicle or an autonomous vehicle is reasonable and effective, and avoids an excessively aggressive efficient lane change behavior of the vehicle that results in frequent lane change behaviors with small actual gains, so as to accurately describe a capability boundary and a minor version difference between different lane change algorithms, and promote rapid iteration and maturation of the lane change algorithm. In addition, intelligence of a lane change decision in a real-time high-dynamic traffic scenario is quantitatively evaluated, to promote efficient evaluation of an efficient lane change capability in the autonomous driving field. Both the lane change time period and the non-lane-change time period may be considered as a complete lane decision process, and the lane change time period and the non-lane-change time period can cover an entire pending evaluation time period in all scenarios. Therefore, this solution may be applied to evaluation of lane change behaviors and non-lane-change behaviors in all scenarios. Specifically, the efficient lane change capability of the vehicle may be comprehensively evaluated in terms of execution of an effective lane change behavior and suppression of an inappropriate lane change behavior, so that all efficient lane change behaviors are executed with reasonable timing and yield significant gains, and lane change behaviors are less, good, fast, and accurate.

In a possible implementation, the calculating, based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period includes: calculating, based on the traveling status information of the vehicle, the traffic scenario information, and the lane change intention corresponding to the lane change decision instruction, a lane change timing evaluation value corresponding to the completed lane change behavior in each lane change time period; then, calculating, based on the traveling status information of the vehicle, the traffic scenario information, and the lane change intention execution result, an actual gain obtained from the completed lane change behavior in each lane change time period; and finally, calculating, based on at least one of the lane change timing evaluation value corresponding to the completed lane change behavior in each lane change time period and the actual gain obtained from the completed lane change behavior in each lane change time period, the lane change effectiveness evaluation value corresponding to the completed lane change behavior in each lane change time period.

Reasonableness of timing of a lane change intention is evaluated before the vehicle executes the lane change action. This allows for quantitative descriptions of reasonableness of timing of a lane change decision and aggressiveness of a driving style in a real-time high-dynamic traffic scenario, thereby contributing to enhancement of intelligence of a driving decision.

An actual gain obtained from the completed lane change behavior is relative to that of a non-lane-change behavior. If the gain is a positive value, a lane change currently performed by the vehicle is an effective lane change behavior. If the gain is a negative value, a lane change currently performed by the vehicle is an ineffective/inappropriate lane change behavior. The gain may be, for example, a speed gain and/or a position gain.

In this manner, whether a single lane change obtains an efficiency gain and a value of the gain are evaluated, to convert an efficient lane change behavior of the vehicle into a continuous, quantitative, positive, or negative lane change gain evaluation value. In this way, lane change effectiveness is easy to be quantified and calculated, and evaluation of an efficient lane change capability can be numerically described and compared, so that a capability boundary and a subtle version difference between different lane change algorithms are accurately described. In addition, based on positive and negative gains obtained from the completed lane change behavior, forward and reverse scenario data can be extracted in a targeted manner for performance analysis and targeted improvement of the lane change algorithm, to promote rapid iteration and maturation of the lane change algorithm.

In a possible implementation, the calculating, based on the traveling status information of the vehicle, the traffic scenario information, and the lane change intention execution result, an actual gain obtained from the completed lane change behavior in each lane change time period includes: calculating, based on the traveling status information of the vehicle, the traffic scenario information, the lane change intention execution result, and respective traveling statuses of a first reference vehicle and a second reference vehicle at a lane change end moment, the actual gain obtained by the vehicle from the completed lane change behavior in each lane change time period, where the first reference vehicle includes sequential preceding and trailing vehicles of the vehicle at a lane change start moment, and the second reference vehicle includes sequential preceding and trailing vehicles of the vehicle at the lane change end moment.

According to the anchoring vehicle-following model method, a lane change time period is considered as a complete lane decision process, and steady-state traveling statuses of a vehicle at a lane change start moment and a lane change end moment are used to calculate an actual gain for posteriori evaluation, where the actual gain is obtained from an efficient lane change behavior. In this way, evaluation data is easily collected and impact of a traffic scenario is fully considered. This avoids microscopic impact of a real-time dynamic change in traffic flow in the time period on an evaluation result, making the evaluation result of this solution more macroscopic, more accurate, and more universal. The method may be used to quantitatively evaluate intelligence of a lane change decision in real-time high-dynamic traffic scenario.

In a possible implementation, the obtaining a lane change effectiveness evaluation value in the pending evaluation time period based on the lane change effectiveness evaluation value corresponding to the completed lane change behavior in each lane change time period includes: determining a proportion of effective lane changes in the pending evaluation time period based on a quantity and directions of all completed lane change behaviors in the pending evaluation time period, and an actual gain obtained; and calculating the lane change effectiveness evaluation value in the pending evaluation time period based on the proportion of effective lane changes and the lane change effectiveness evaluation value corresponding to the completed lane change behavior in each lane change time period.

The proportion of effective lane changes in the pending evaluation time period represents a proportion of efficient lane change behaviors whose actual gains are positive values in the pending evaluation time period in all lane change intentions generated by a lane change decision system, and may reflect reasonableness of an intention of the lane change decision system and a success rate of executing the lane change behavior.

The lane change effectiveness evaluation value in the pending evaluation time period is calculated based on the lane change effectiveness evaluation value corresponding to the completed lane change behavior in each lane change time period and the proportion of effective lane changes in the pending evaluation time period that are obtained through calculation. In this way, gains of all lane change behaviors of the vehicle in the pending evaluation time period may be described, to describe an overall level of lane change behavior execution in an efficient lane change capability of the vehicle. For example, a higher proportion of effective lane changes in the pending evaluation time period indicates a higher proportion of lane change behaviors whose gains reach a preset gain threshold, namely, a larger quantity of times of reasonable and effective lane change behaviors executed in all completed lane change behaviors. A larger lane change effectiveness evaluation value corresponding to the completed lane change behavior in each lane change time period indicates a larger efficiency gain obtained from a single lane change, and a higher level of performing the lane change behavior. Therefore, a larger lane change effectiveness evaluation value in the pending evaluation time period indicates that the lane change behavior of the vehicle is executed accurately and well, and an efficient lane change capability of the vehicle is stronger.

In a possible implementation, the method further includes: determining an atypical lane change evaluation value in each lane change time period of the pending evaluation time period based on the traveling status information of the vehicle, the lane change intention corresponding to the lane change decision instruction, lane change behavior information that no lane change action is generated or a lane change action exists but is not completed corresponding to the lane change intention execution result, information that two consecutive lane change behaviors in the pending evaluation time period are in a same direction or in opposite directions, and information about a time interval and/or a distance interval between the two consecutive lane change behaviors.

An atypical lane change behavior may be understood as at least one of a lane change behavior corresponding to an ineffective lane change intention and a lane change behavior corresponding to a lane change failure. For example, the atypical lane change behavior includes a lane change corresponding to at least one of a lane change intention jump, a lane change failure, back-and-forth lane changes, and consecutive lane changes in a same direction.

The atypical lane change evaluation value includes an evaluation value corresponding to at least one of a lane change intention jump, a lane change failure, back-and-forth lane changes, and consecutive lane changes in a same direction.

Based on the obtained traveling status information of the vehicle and the lane change intention corresponding to the lane change decision instruction, statistics are collected on a case in which no corresponding lane change behavior is generated or a generated lane change behavior is not completed in a high-dynamic traffic scenario, to evaluate a lane change behavior with an incomplete trajectory such as an ineffective intention/the intention jump, a lane change cancellation, or the lane change failure. Based on a plurality of continuous lane change behaviors completed by the vehicle, a time interval between the lane change behaviors, and a distance interval between the lane change behaviors, statistics are collected on a coupled lane change behavior such as consecutive lane changes in a same direction and back-and-forth lane changes in opposite directions.

The atypical lane change behaviors can affect intelligence evaluation of a lane change capability of the vehicle and driving experience of an autonomous driving system. Therefore, a statistical result of such a non-best-experience lane change behavior also affects the efficient lane change capability score. In addition, the statistical result of this type of lane change behavior also constitutes a part of the capability boundary of the lane change algorithm, and is used by the lane change algorithm to improve a capability in a corresponding scenario in a targeted manner.

In a possible implementation, the method further includes: calculating the overall lane change efficiency evaluation value based on a total traveling distance, total traveling time, and a total quantity of lane changes of the vehicle in a total lane change time period of the pending evaluation time period.

The overall lane change efficiency evaluation value represents an average traveling speed and a lane change execution frequency of the vehicle in the pending evaluation time period. The lane change execution frequency may be understood as a quantity of lane change behaviors executed in unit time. Alternatively, the lane change execution frequency may be understood as a quantity of lane change behaviors executed in a unit traveling distance, or the like.

In this example, overall traffic efficiency of the vehicle in the evaluation time period can be obtained based on the average traveling speed, the lane change execution frequency, and the like in the pending evaluation time period that are reflected by the overall lane change efficiency evaluation value. This most directly reflects strength of an efficient lane change capability from a macro perspective without a need to consider microscopic impact of a real-time dynamic change in traffic flow in the pending evaluation time period on an evaluation result, thereby improving universality and applicability of this solution, and enabling a simple, efficient, and rapid quantitative evaluation of an efficient lane change capability in real-time high-dynamic traffic scenario.

In a possible implementation, the method further includes: calculating the topology constraint evaluation value based on at least one of information that the vehicle departs from a navigation lane, information about a lane change across a solid line, and information about occupation of a dedicated lane.

The topology constraint evaluation value represents an evaluation value corresponding to at least one of a lane change in violation of a traffic regulation, a lane change that results in a departure from a navigation lane, and the like.

In this example, compliance of the efficient lane change behavior with a traffic regulation and a navigation target may be considered during quantitative evaluation of the efficient lane change capability, to prevent lane change behaviors that violate traffic regulations and deviate from navigation targets, and similar actions from occurring in the pursuit of improving overall efficient lane change performance, which could lead to poor driving experience. This further ensures, from the perspective of traffic regulation and navigation compliance, that all efficient lane change behaviors are executed with reasonable timing and yield significant gains.

In a possible example, overall traveling efficiency of the vehicle in an evaluation time period is first obtained based on an average traveling speed, a lane change execution frequency, and the like in the evaluation time period; and then advantages and disadvantages of an efficient lane change behavior are measured based on aspects such as reasonableness of timing of an intention, reasonableness of a lane change direction, an actual gain, traffic regulation compliance, and navigation compliance of the efficient lane change behavior. In addition, advantages and disadvantages of a non-lane-change decision are measured based on aspects such as a low-speed suppression loss, an intention jump, a lane change failure, and the like in a non-lane-change time period of the evaluation time period, to evaluate the efficient lane change capability of the vehicle. A higher average traveling speed, a lower lane change execution frequency, more appropriate intention timing, a more reasonable lane change direction, a higher lane change behavior gain, better traffic regulation and navigation compliance, a smaller low-speed suppression loss of a non-lane-change behavior, and fewer intention jumps and lane change failures indicate fewer, better, faster, and more accurate lane change behaviors of the vehicle, and a stronger efficient lane change capability of the vehicle. Therefore, this solution measures and evaluates the efficient lane change capability from a plurality of dimensions, to enable complete, fast, accurate, and quantitative descriptions of a capability boundary and a minor version difference between lane change algorithms, and quantitative evaluation of intelligence of a lane change decision in real-time high-dynamic traffic scenario. This helps improve an efficient lane change capability of the lane change algorithm in a corresponding scenario in a targeted manner, promote fast iteration and maturation of the lane change algorithm, and resolve an efficient evaluation problem of an advanced efficient lane change capacity in the autonomous driving field.

According to a third aspect, an embodiment of this application provides an apparatus for evaluating an efficient lane change capability, including: an information determining module, configured to determine traveling status information of a vehicle and traffic scenario information in a pending evaluation time period based on a vehicle traveling trajectory, a lane change decision instruction, road scenario information, and a real-time traffic flow status; a first calculation module, configured to calculate, in each lane change time period of the pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period; and a second calculation module, configured to calculate an efficient lane change capability score based on a lane change effectiveness evaluation value in the pending evaluation time period, where the lane change effectiveness evaluation value in the pending evaluation time period is obtained based on the lane change effectiveness evaluation value corresponding to the completed lane change behavior in each lane change time period.

In a possible implementation, the first calculation module is configured to: calculate, based on the traveling status information of the vehicle, the traffic scenario information, and the lane change intention corresponding to the lane change decision instruction, a lane change timing evaluation value corresponding to the completed lane change behavior in each lane change time period; calculate, based on the traveling status information of the vehicle, the traffic scenario information, and the lane change intention execution result, an actual gain obtained from the completed lane change behavior in each lane change time period; and calculate, based on at least one of the lane change timing evaluation value corresponding to the completed lane change behavior in each lane change time period and the actual gain obtained from the completed lane change behavior in each lane change time period, the lane change effectiveness evaluation value corresponding to the completed lane change behavior in each lane change time period.

In a possible implementation, the first calculation module is further configured to: calculate, based on the traveling status information of the vehicle, the traffic scenario information, the lane change intention execution result, and respective traveling statuses of a first reference vehicle and a second reference vehicle at a lane change end moment, the actual gain obtained by the vehicle from the completed lane change behavior in each lane change time period, where the first reference vehicle includes sequential preceding and trailing vehicles of the vehicle at a lane change start moment, and the second reference vehicle includes sequential preceding and trailing vehicles of the vehicle at the lane change end moment.

In a possible implementation, the apparatus further includes a third calculation module, configured to: determine a proportion of effective lane changes in the pending evaluation time period based on a quantity and directions of all completed lane change behaviors in the pending evaluation time period, and an actual gain obtained; and calculate the lane change effectiveness evaluation value in the pending evaluation time period based on the proportion of effective lane changes and the lane change effectiveness evaluation value corresponding to the completed lane change behavior in each lane change time period.

In a possible implementation, the efficient lane change capability score is obtained based on the lane change effectiveness evaluation value and at least one of an overall lane change efficiency evaluation value, a suppression loss evaluation value, an atypical lane change evaluation value, a topology constraint evaluation value, and a traffic scenario evaluation value in the pending evaluation time period. The overall lane change efficiency evaluation value represents an average traveling speed and a lane change execution frequency of the vehicle in the pending evaluation time period. The suppression loss evaluation value represents a loss value corresponding to a non-lane-change behavior of the vehicle. The atypical lane change evaluation value includes an evaluation value corresponding to at least one of a lane change intention jump, a lane change failure, back-and-forth lane changes, and consecutive lane changes in a same direction. The topology constraint evaluation value represents an evaluation value corresponding to at least one of a lane change in violation of a traffic regulation and a lane change that results in a departure from a navigation lane. The traffic scenario evaluation value represents an evaluation value corresponding to the traffic scenario information.

In a possible implementation, the pending evaluation time period further includes a non-lane-change time period; and the apparatus further includes a fourth calculation module, configured to: calculate, in each non-lane-change time period of the pending evaluation time period based on the traveling status information of the vehicle and the traffic scenario information, a suppression loss evaluation value generated due to non-execution of a lane change action in each non-lane-change time period; and obtain the suppression loss evaluation value in the pending evaluation time period based on the suppression loss evaluation value generated due to non-execution of the lane change action in each non-lane-change time period.

In a possible implementation, the fourth calculation module is further configured to: obtain, through calculation, a suppression loss value of the vehicle in each non-lane-change time period based on the traveling status information of the vehicle, the traffic scenario information, and traveling status information of a third reference vehicle and a fourth reference vehicle, where the third reference vehicle includes sequential preceding and trailing vehicles of the vehicle in a first reference lane, the first reference lane is a lane in which the vehicle is located, the fourth reference vehicle includes sequential preceding and trailing vehicles relative to a position that is in a second reference lane and that corresponds to the vehicle, the second reference lane is a lane to which the vehicle is changeable, and the corresponding position is a position that is in the second reference lane and that corresponds to a position of the vehicle; calculate a long-time suppression loss value in each non-lane-change time period based on the suppression loss value in each non-lane-change time period and duration of each non-lane-change time period of the pending evaluation time period; calculate a proportion of suppression duration in each non-lane-change time period based on the duration of each non-lane-change time period, a control frequency of the lane change decision instruction, and the suppression loss value, where the proportion of suppression duration represents a conservative degree of a lane change; and calculate, based on at least one of the suppression loss value in each non-lane-change time period, the long-time suppression loss value, and the proportion of suppression duration, the suppression loss evaluation value generated due to non-execution of the lane change action in each non-lane-change time period.

In a possible implementation, the fourth calculation module is further configured to: obtain a proportion of suppression duration in the pending evaluation time period based on the proportion of suppression duration in each non-lane-change time period; and calculate the suppression loss evaluation value in the pending evaluation time period based on the suppression loss evaluation value generated due to non-execution of the lane change action in each non-lane-change time period and the proportion of suppression duration in the pending evaluation time period.

In a possible implementation, the apparatus further includes a fifth calculation module, configured to: determine an atypical lane change evaluation value in each lane change time period of the pending evaluation time period based on the traveling status information of the vehicle, the lane change intention corresponding to the lane change decision instruction, lane change behavior information that no lane change action is generated or a lane change action exists but is not completed corresponding to the lane change intention execution result, information that two consecutive lane change behaviors in the pending evaluation time period are in a same direction or in opposite directions, and information about a time interval and/or a distance interval between the two consecutive lane change behaviors.

In a possible implementation, the apparatus further includes a sixth calculation module, configured to: calculate the overall lane change efficiency evaluation value based on a total traveling distance, total traveling time, and a total quantity of lane changes of the vehicle in a total lane change time period of the pending evaluation time period.

In a possible implementation, the apparatus further includes a seventh calculation module, configured to: calculate the topology constraint evaluation value based on at least one of information that the vehicle departs from a navigation lane, information about a lane change across a solid line, and information about occupation of a dedicated lane.

According to a fourth aspect, an embodiment of this application provides an apparatus for evaluating an efficient lane change capability, including: an information determining module, configured to determine traveling status information of a vehicle and traffic scenario information in a pending evaluation time period based on a vehicle traveling trajectory, a lane change decision instruction, road scenario information, and a real-time traffic flow status; a first calculation module, configured to calculate, in each non-lane-change time period of the pending evaluation time period based on the traveling status information of the vehicle and the traffic scenario information, a suppression loss evaluation value generated due to non-execution of a lane change action in each non-lane-change time period, where the suppression loss evaluation value represents a loss value corresponding to a non-lane-change behavior of the vehicle; and a second calculation module, configured to calculate an efficient lane change capability score based on a suppression loss evaluation value in the pending evaluation time period, where the suppression loss evaluation value in the pending evaluation time period is obtained based on the suppression loss evaluation value generated due to non-execution of the lane change action in each non-lane-change time period.

In a possible implementation, the first calculation module is configured to: obtain, through calculation, a suppression loss value of the vehicle in each non-lane-change time period based on the traveling status information of the vehicle, the traffic scenario information, and traveling status information of a third reference vehicle and a fourth reference vehicle, where the third reference vehicle includes sequential preceding and trailing vehicles of the vehicle in a first reference lane, the first reference lane is a lane in which the vehicle is located, the fourth reference vehicle includes sequential preceding and trailing vehicles relative to a position that is in a second reference lane and that corresponds to the vehicle, the second reference lane is a lane to which the vehicle is changeable, and the corresponding position is a position that is in the second reference lane and that corresponds to a position of the vehicle; calculate a long-time suppression loss value in each non-lane-change time period based on the suppression loss value in each non-lane-change time period and duration of each non-lane-change time period of the pending evaluation time period; calculate a proportion of suppression duration in each non-lane-change time period based on the duration of each non-lane-change time period, a control frequency of the lane change decision instruction, and the suppression loss value, where the proportion of suppression duration represents a conservative degree of a lane change; and calculate, based on at least one of the suppression loss value in each non-lane-change time period, the long-time suppression loss value, and the proportion of suppression duration, the suppression loss evaluation value generated due to non-execution of the lane change action in each non-lane-change time period.

In a possible implementation, the apparatus further includes a third calculation module, configured to: obtain a proportion of suppression duration in the pending evaluation time period based on the proportion of suppression duration in each non-lane-change time period; and calculate the suppression loss evaluation value in the pending evaluation time period based on the suppression loss evaluation value generated due to non-execution of the lane change action in each non-lane-change time period and the proportion of suppression duration in the pending evaluation time period.

In a possible implementation, the efficient lane change capability score is obtained based on the suppression loss evaluation value and at least one of an overall lane change efficiency evaluation value, a lane change effectiveness evaluation value, an atypical lane change evaluation value, a topology constraint evaluation value, and a traffic scenario evaluation value in the pending evaluation time period. The overall lane change efficiency evaluation value represents an average traveling speed and a lane change execution frequency of the vehicle in the pending evaluation time period. The atypical lane change evaluation value includes an evaluation value corresponding to at least one of a lane change intention jump, a lane change failure, back-and-forth lane changes, and consecutive lane changes in a same direction. The topology constraint evaluation value represents an evaluation value corresponding to at least one of a lane change in violation of a traffic regulation and a lane change that results in a departure from a navigation lane. The traffic scenario evaluation value represents an evaluation value corresponding to the traffic scenario information.

In a possible implementation, the pending evaluation time period further includes each lane change time period, and the apparatus further includes a fourth calculation module, configured to: calculate, in each lane change time period of the pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period; and obtain a lane change effectiveness evaluation value in the pending evaluation time period based on the lane change effectiveness evaluation value corresponding to the completed lane change behavior in each lane change time period.

In a possible implementation, the fourth calculation module is further configured to: calculate, based on the traveling status information of the vehicle, the traffic scenario information, and the lane change intention corresponding to the lane change decision instruction, a lane change timing evaluation value corresponding to the completed lane change behavior in each lane change time period; calculate, based on the traveling status information of the vehicle, the traffic scenario information, and the lane change intention execution result, an actual gain obtained from the completed lane change behavior in each lane change time period; and calculate, based on at least one of the lane change timing evaluation value corresponding to the completed lane change behavior in each lane change time period and the actual gain obtained from the completed lane change behavior in each lane change time period, the lane change effectiveness evaluation value corresponding to the completed lane change behavior in each lane change time period.

In a possible implementation, the fourth calculation module is further configured to: calculate, based on the traveling status information of the vehicle, the traffic scenario information, the lane change intention execution result, and respective traveling statuses of a first reference vehicle and a second reference vehicle at a lane change end moment, the actual gain obtained by the vehicle from the completed lane change behavior in each lane change time period, where the first reference vehicle includes sequential preceding and trailing vehicles of the vehicle at a lane change start moment, and the second reference vehicle includes sequential preceding and trailing vehicles of the vehicle at the lane change end moment.

In a possible implementation, the fourth calculation module is further configured to: determine a proportion of effective lane changes in the pending evaluation time period based on a quantity and directions of all completed lane change behaviors in the pending evaluation time period, and an actual gain obtained; and calculate the lane change effectiveness evaluation value in the pending evaluation time period based on the proportion of effective lane changes and the lane change effectiveness evaluation value corresponding to the completed lane change behavior in each lane change time period.

In a possible implementation, the apparatus further includes a fifth calculation module, configured to: determine an atypical lane change evaluation value in each lane change time period of the pending evaluation time period based on the traveling status information of the vehicle, the lane change intention corresponding to the lane change decision instruction, lane change behavior information that no lane change action is generated or a lane change action exists but is not completed corresponding to the lane change intention execution result, information that two consecutive lane change behaviors in the pending evaluation time period are in a same direction or in opposite directions, and information about a time interval and/or a distance interval between the two consecutive lane change behaviors.

In a possible implementation, the apparatus further includes a sixth calculation module, configured to: calculate the overall lane change efficiency evaluation value based on a total traveling distance, total traveling time, and a total quantity of lane changes of the vehicle in a total lane change time period of the pending evaluation time period.

In a possible implementation, the apparatus further includes a seventh calculation module, configured to: calculate the topology constraint evaluation value based on at least one of information that the vehicle departs from a navigation lane, information about a lane change across a solid line, and information about occupation of a dedicated lane.

According to a fifth aspect, an embodiment of this application provides an apparatus for evaluating an efficient lane change capability, including a processor and a memory. The memory is configured to store program code. The processor is configured to invoke the program code to perform the method according to any one of the possible implementations of the first aspect or the method according to any one of the possible implementations of the second aspect.

According to a sixth aspect, an embodiment of this application provides a computer-readable storage medium. The computer-readable storage medium stores a computer program. The computer program is executed by a processor to implement the method according to any one of the possible implementations of the first aspect or the method according to any one of the possible implementations of the second aspect.

According to a seventh aspect, an embodiment of this application provides a computer program product. When the computer program product runs on a computer, the computer is enabled to perform the method according to any one of the possible implementations of the first aspect or the method according to any one of the possible implementations of the second aspect.

According to an eighth aspect, an embodiment of this application provides a chip system. The chip system is used in an electronic device. The chip system includes one or more interface circuits and one or more processors. The interface circuit and the processor are interconnected through a line. The interface circuit is configured to: receive a signal from a memory of the electronic device, and send the signal to the processor. The signal includes computer instructions stored in the memory. When the processor executes the computer instructions, the electronic device performs the method according to any one of the possible implementations of the first aspect or the method according to any one of the possible implementations of the second aspect.

According to a ninth aspect, an embodiment of this application provides an intelligent vehicle, including a travel system, a sensing system, a control system, and a computer system. The computer system is used to perform the method according to any one of the possible implementations of the first aspect or the method according to any one of the possible implementations of the second aspect.

It may be understood that the apparatus according to the third aspect, the apparatus according to the fourth aspect, the apparatus according to the fifth aspect, the computer-readable storage medium according to the sixth aspect, the computer program product according to the seventh aspect, the chip system according to the eighth aspect, or the intelligent vehicle according to the ninth aspect are all configured to perform the method according to any one of the possible implementations of the first aspect and the method according to any one of the possible implementations of the second aspect. Therefore, for beneficial effects that can be achieved by the apparatus, the computer-readable storage medium, the computer program product, the chip system, and the intelligent vehicle, refer to the beneficial effects in the corresponding methods. Details are not described herein again.

### BRIEF DESCRIPTION OF DRAWINGS

The following describes accompanying drawings used in embodiments of this application.
FIG. 1a is a diagram of a system for evaluating an efficient lane change capability according to an embodiment of this application;
FIG. 1b is a diagram of another system for evaluating an efficient lane change capability according to an embodiment of this application;
FIG. 1c is a diagram of still another system for evaluating an efficient lane change capability according to an embodiment of this application;
FIG. 2 is a schematic flowchart of a method for evaluating an efficient lane change capability according to an embodiment of this application;
FIG. 3 is a diagram of division of a pending evaluation time period according to an embodiment of this application;
FIG. 4 is a diagram of division of another pending evaluation time period according to an embodiment of this application;
FIG. 5 is a schematic flowchart of another method for evaluating an efficient lane change capability according to an embodiment of this application;
FIG. 6 is a diagram of a corresponding position according to an embodiment of this application;
FIG. 7 is a schematic flowchart of still another method for evaluating an efficient lane change capability according to an embodiment of this application;
FIG. 8 is a diagram of an anchoring vehicle-following case according to an embodiment of this application;
FIG. 9 is diagram of another anchoring vehicle-following case according to an embodiment of this application;
FIG. 10 is a diagram of a structure of an apparatus for evaluating an efficient lane change capability according to an embodiment of this application;
FIG. 11 is a diagram of a structure of another apparatus for evaluating an efficient lane change capability according to an embodiment of this application; and
FIG. 12 is a diagram of a structure of still another apparatus for evaluating an efficient lane change capability according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application.

For ease of understanding, some concepts related to embodiments of this application are described for reference by using examples below. Details are as follows:

1. Efficient lane change gain: If an actual position or a steady-state speed of a vehicle after a lane change is significantly improved compared with a position or a steady-state speed of the vehicle before the lane change (for example, the actual position is 50 m ahead and the steady-state speed is increased by 3 km/h) in a scenario in which the lane change may be performed or may not be performed, it is considered that the current lane change is an effective efficient lane change behavior. In this case, a speed gain of the current lane change is a steady-state speed increment relative to a non-lane-change case, and a position gain of the current lane change is an actual position advance relative to the non-lane-change case.

2. Low-speed suppression loss: If a vehicle does not change a lane for a period of time in a scenario in which a lane change condition is met, a preceding vehicle is a low-speed vehicle, and a corresponding position of the vehicle after a lane change can be more forward or a steady-state speed can be significantly increased (for example, an actual position is 50 m ahead and the steady-state speed is increased by 3 km/h), it is considered that the current behavior is a low-speed suppression behavior. In this case, a time length of the current behavior is duration of current low-speed suppression, a speed suppression loss of the current behavior is a cumulative value of a steady-state speed increment relative to a left/right lane change that can be obtained in the low-speed suppression duration, and a position suppression loss of the current behavior is a cumulative value of a position advance relative to the left/right lane change that can be obtained in the low-speed suppression duration.

3. Lane change intention: The lane change intention is a left/right lane change decision made by a driving decision module during traveling of a vehicle (for example, a driver turns on a turn signal, or an autonomous driving system outputs a lane change instruction). If the intention is executed and a lane change behavior starts, the intention is considered as an effective lane change intention, and reasonableness of lane change timing is measured based on waiting duration from a moment at which the lane change intention is generated to a moment at which the lane change behavior starts to be executed. If a left/right lane change intention is canceled before the lane change behavior starts to be executed, the lane change intention is considered as an ineffective lane change intention or an intention jump.

4. Lane change failure: In a process in which a vehicle executes a lane change behavior, if the vehicle fails to complete an entire lane change process or fails to reach a target lane and straighten the vehicle body due to reasons such as approaching of surrounding traffic flow or a driving decision change, it is considered that the lane change fails.

5. Efficient lane change capability: The efficient lane change capability is a capability of a vehicle to select reasonable and appropriate timing for performing a lane change behavior to improve traveling efficiency and driving experience of the vehicle. In a possible implementation, in embodiments of this application, overall traveling efficiency of the vehicle in an evaluation time period is first obtained based on an average traveling speed, a lane change execution frequency, and the like in the evaluation time period; and then advantages and disadvantages of an efficient lane change behavior are measured based on aspects such as reasonableness of timing of an intention, reasonableness of a lane change direction, an actual gain, traffic regulation compliance, and navigation compliance of the efficient lane change behavior. In addition, advantages and disadvantages of a non-lane-change decision are measured based on aspects such as a low-speed suppression loss, an intention jump, a lane change failure, and the like in a non-lane-change time period of the evaluation time period, to evaluate the efficient lane change capability of the vehicle. A higher average traveling speed, a lower lane change execution frequency, more appropriate intention timing, a more reasonable lane change direction, a higher lane change behavior gain, better traffic regulation and navigation compliance, a smaller low-speed suppression loss of a non-lane-change behavior, and fewer intention jumps and lane change failures indicate faster, fewer, and more accurate lane change behaviors of the vehicle, and a stronger efficient lane change capability of the vehicle.

The foregoing example descriptions of the concepts may be applied in the following embodiments.

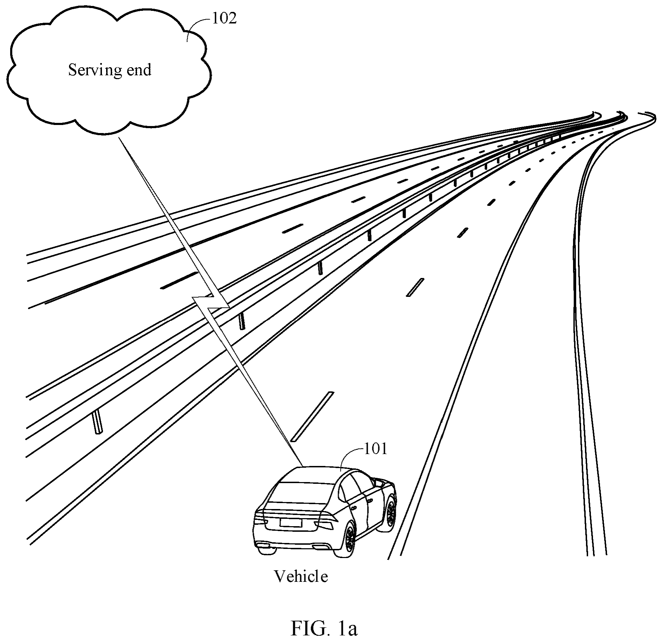

The following describes in detail a system architecture in embodiments of this application with reference to the accompanying drawings. FIG. 1a is a diagram of a system for evaluating an efficient lane change capability applicable to an embodiment of this application. The system includes a vehicle 101 and a serving end 102.

The vehicle 101 is an apparatus that has a communication capability and a computing capability, and can provide a mobile travel service for a user. The vehicle 101 can provide an environment in which software, hardware, or a module combining software and hardware is deployed. For example, software can be installed on the vehicle 101. For another example, the vehicle 101 has an interface for connecting to hardware, and the hardware may be connected to the vehicle 101 through the interface. For another example, the vehicle 101 has an environment in which a hardware driver is installed.

The serving end 102 is an apparatus having a centralized computing capability. For example, the serving end 102 may be implemented by using an apparatus such as a server, a virtual machine, a cloud, a roadside apparatus, or a robot.

When the serving end 102 includes a server, a type of the server includes but is not limited to a general-purpose computer, a dedicated server computer, a blade server, and the like. A quantity of servers included in the serving end 102 is not strictly limited in this application, and there may be one or more servers (for example, a server cluster).

The virtual machine is a software-simulated computing module that has complete hardware system functions and that runs in an entirely isolated environment. Certainly, in addition to the virtual machine, the serving end 102 may be implemented by using another computing instance, for example, a container.

The cloud is a software platform that uses an application virtualization technology, and can enable one or more pieces of software and applications to be developed and run in an independent virtualized environment. Optionally, when the serving end 102 is implemented by using the cloud, the cloud may be deployed on a public cloud, a private cloud, a hybrid cloud, or the like.

The roadside apparatus is an apparatus disposed on a road side (or an intersection, a roadside, or the like). A road may be an outdoor road (for example, a main road, an auxiliary road, an elevated road, or a temporary road), or may be an indoor road (for example, a road in an indoor parking lot). The roadside apparatus can provide a service for the vehicle. It should be noted that the roadside apparatus may be an independent device, or may be integrated into another device. For example, the roadside apparatus may be integrated into a device such as a smart gas station, a charging pile, a smart signal light, a street lamp, a telegraph pole, or a traffic sign.

In this embodiment of this application, the serving end 102 can obtain a traveling trajectory, a lane change decision instruction, road scenario information, and a real-time traffic flow status of the vehicle 101, to evaluate an efficient lane change capability of the vehicle 101.

This embodiment of this application may be applied to an autonomous driving scenario, or may be applied to an assisted driving scenario or a human driving scenario. This is not specifically limited in this solution.

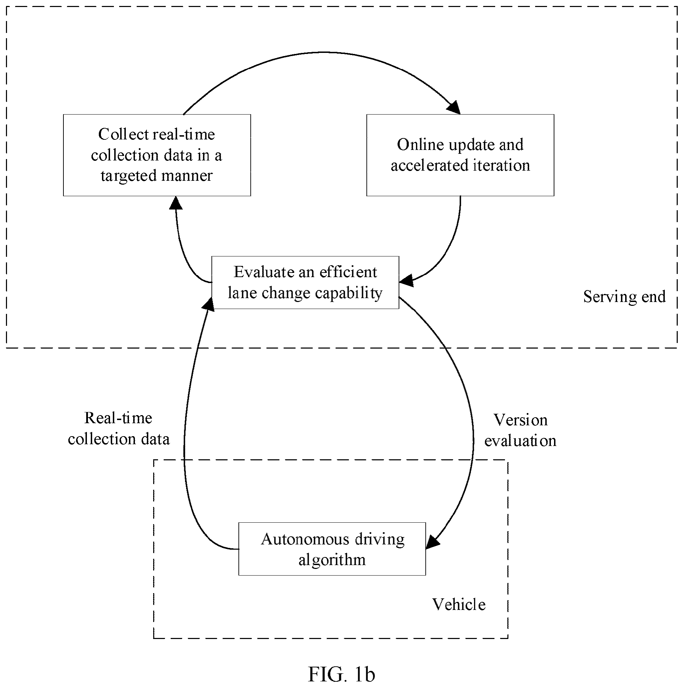

In a possible implementation, this solution may be applied to efficient evaluation of an efficient lane change capability and data collection in a targeted manner during autonomous driving, so that an efficient lane change capability boundary of the system can be quickly and accurately described, to promote fast iteration and maturation of an efficient lane change algorithm of the system. As shown in FIG. 1b, the serving end 102 may measure intelligence and driving experience of an efficient lane change capability of a to-be-evaluated autonomous driving system by using the system for evaluating an efficient lane change capability, that is, perform version evaluation. Based on a version evaluation result, scenarios (such as, continuous fast traffic flow, a road topology change, and long-time low-speed suppression) in which a lane change algorithm of the to-be-evaluated autonomous driving system underperforms are screened, to collect a real-time collection data set in a targeted manner. The dataset can be further used for iterative training and online update of the lane change algorithm of the to-be-evaluated autonomous driving system, to accelerate an iterative update speed of the lane change algorithm. If a version optimization objective is achieved after version evaluation is performed again on an updated and iterated lane change algorithm by using the system for evaluating an efficient lane change capability in this solution, a lane change algorithm of an autonomous driving system at a vehicle end may be updated.

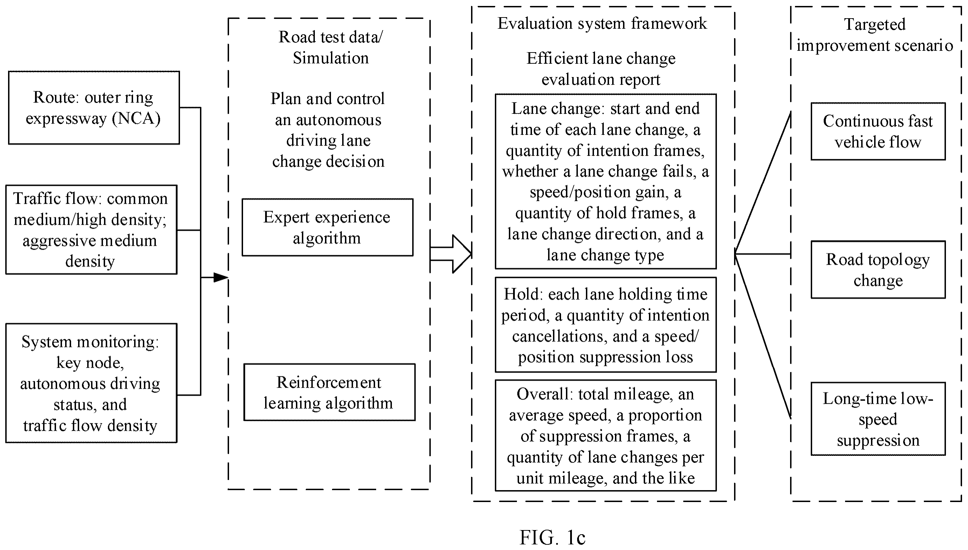

The system for evaluating an efficient lane change capability in this embodiment of this application may be applied to the real-time road test or daily driving, and may also be applied together with a simulation system or offline road test data. As shown in FIG. 1c, the simulation system may be used to customize an evaluation route, traffic flow in an evaluation scenario, a vehicle traveling feature, an autonomous driving status, and the like. A data source required by the simulation system may be offline road test data playback, road test data generated by a simulator through simulation, or the like. A lane change behavior of the to-be-evaluated autonomous driving system may be generated by human driving and manipulating a vehicle, or may be generated by a driving lane change algorithm such as an expert system, supervised learning, or reinforcement learning. After the evaluation is performed by using the system for evaluating an efficient lane change capability in this solution, an evaluation report is used to screen targeted improvement scenario data from online stored evaluation data, for example, screen scenario data with an underperformed lane change, such as continuous fast traffic flow, a road topology change, and long-time low-speed suppression.

The foregoing describes the architecture of embodiments of this application. The following describes the method in embodiments of this application in detail.

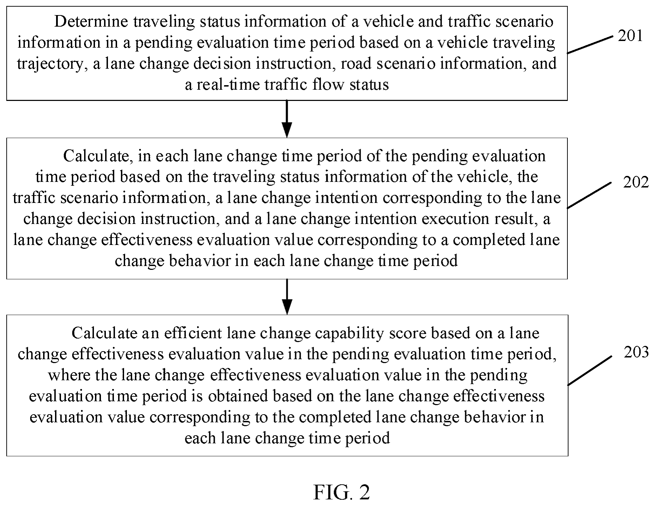

FIG. 2 is a schematic flowchart of a method for evaluating an efficient lane change capability according to an embodiment of this application. Optionally, the method may be applied to the foregoing system for evaluating an efficient lane change capability, for example, the system for evaluating an efficient lane change capability shown in FIG. 1a. The method for evaluating an efficient lane change capability shown in FIG. 2 may include steps 201 to 203. It should be understood that, for ease of description in this application, a sequence of 201 to 203 is used for description, but this is not intended to limit execution that is necessary in the foregoing sequence. An execution sequence, execution time, a quantity of execution times, and the like of the foregoing one or more steps are not limited in embodiments of this application. The following uses an example in which steps 201 to 203 in the method for evaluating an efficient lane change capability are performed by a server for description. This application is also applicable to other execution bodies. Steps 201 to 203 are specifically as follows:

201: Determine traveling status information of a vehicle and traffic scenario information in a pending evaluation time period based on a vehicle traveling trajectory, a lane change decision instruction, road scenario information, and a real-time traffic flow status.

The vehicle traveling trajectory is a series of route position points that the vehicle passes through in the pending evaluation time period, information about a moment at which the vehicle passes through each position point, and the like. The lane change decision instruction prompts a driver to change a lane, or instructs a lane change during auxiliary driving, for example, the driver turns on a turn signal, or an autonomous driving system outputs a lane change instruction. The road scenario information may include information such as a lane line, a quantity of lanes, a lane width, an intersection, a traffic light, and a speed limit. The real-time traffic flow status may include real-time traveling status information of vehicles on lanes including several adjacent vehicles around a to-be-evaluated vehicle.

The traveling status information may include at least one of the following: a real-time traveling speed, an acceleration, a traveling direction, navigation information, a lane change intention, a lane change action completion status, and the like of the vehicle. The traffic scenario information may include at least one of the following: road topology information such as a lane line type, a lane type, a lane width, and a speed limit of a lane in which a to-be-evaluated vehicle is located and a lane adjacent to the lane in which the to-be-evaluated vehicle is located, and further include vehicle traveling status information such as traveling status information of an adjacent vehicle around the to-be-evaluated vehicle, and a transverse relative position, a longitudinal relative position, a transverse relative speed, and a longitudinal relative speed relative to the to-be-evaluated vehicle.

202: Calculate, in each lane change time period of the pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period.

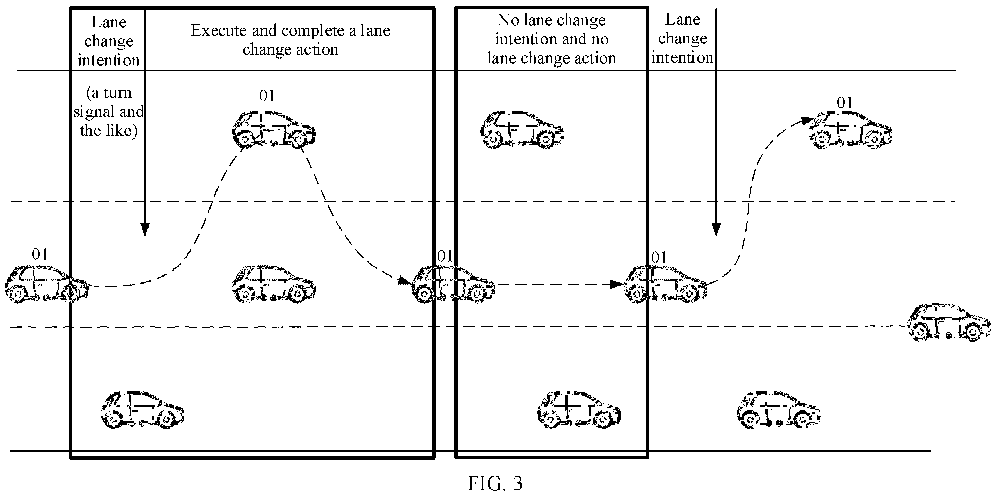

In a possible implementation, the pending evaluation time period may be divided into at least one lane change time period and at least one non-lane-change time period based on a division manner: a lane change intention starts to be generated -> the vehicle travels back to the middle of a lane or the vehicle starts to travel back to the middle of the lane -> the lane change intention is generated. FIG. 3 shows a lane change time period (left box) and a non-lane-change time period (right box) according to an embodiment of this application. The lane change time period may correspond to a time period corresponding to a process in which the lane change intention starts to be generated -> the vehicle travels back to the middle of the lane. The non-lane-change time period may correspond to a time period corresponding to a process in which the vehicle starts to travel back to the middle of the lane -> the lane change intention is generated.

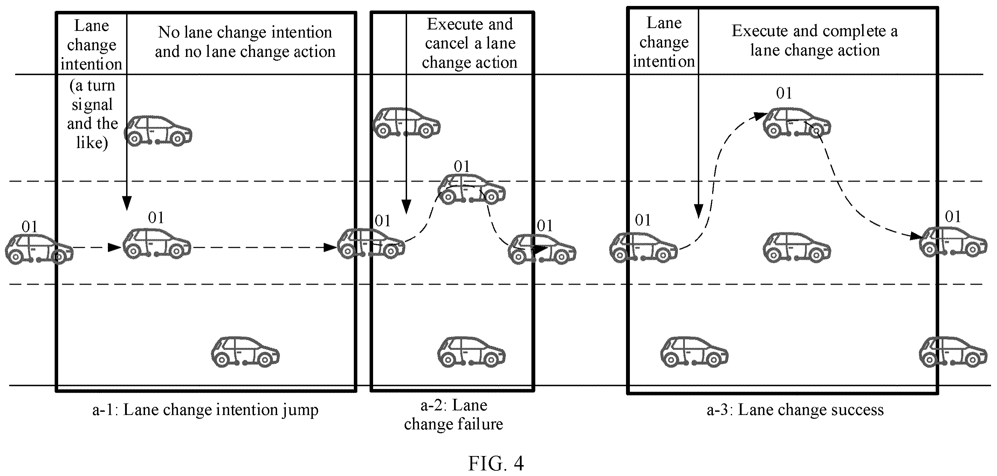

The lane change intention corresponding to the lane change decision instruction may be, for example, the driver turning on a turn signal, or the autonomous driving system outputting a lane change instruction. The lane change intention execution result may include lane change action completion, lane change action incompletion (a lane change failure, a lane change cancellation, or the like), and no lane change action (an intention jump and the like). Based on different lane change intention execution results, as shown in FIG. 4, the lane change time period may be further classified into three types, for example, a type corresponding to a time period a-1 is the lane change intention + no lane change action (the intention jump and the like); a type corresponding to a time period a-2 is the lane change intention + lane change action completion (the lane change failure, the lane change cancellation, and the like); and a type corresponding to a time period a-3 is the lane change intention + lane change action completion, and the like.

The lane change effectiveness evaluation value corresponding to the completed lane change behavior may be based on an evaluation value corresponding to, for example, the lane change intention + lane change action completion corresponding to the time period a-3. The lane change effectiveness evaluation value represents reasonableness of timing of a lane change behavior and an actual gain that can be obtained after the lane change is completed.

It should be noted that the pending evaluation time period may include only a lane change time period, or may include both a lane change time period and a non-lane-change time period. This is not limited in this solution.

In a possible implementation, step 202 may include steps 2021 to 2023. Details are as follows:

2021: Calculate, based on the traveling status information of the vehicle, the traffic scenario information, and the lane change intention corresponding to the lane change decision instruction, a lane change timing evaluation value corresponding to the completed lane change behavior in each lane change time period.

Based on the obtained traveling status information of the vehicle and the obtained traffic scenario information, if a lane change intention is generated in the lane change time period according to the lane change decision instruction of the vehicle, reasonableness of timing of the lane change intention is evaluated before a lane change action of the vehicle occurs.

For an autonomous vehicle, if a lane change intention is generated too early, a lane change behavior can be executed after long waiting time, affecting driving experience. In addition, due to a real-time dynamic change in traffic flow, if the lane change intention is generated too early, the lane change intention is likely to be canceled, increasing a quantity of lane change intention jumps. If a lane change intention is generated too late, lane change waiting time is short, and consequently, space for performing a lane change action is small and a lane change is too urgent, even the lane change fails or the lane change action cannot be executed, affecting driving safety and comfort. In addition, if there are too many or too few lane change intentions, a lane change behavior of the vehicle is likely to be excessively radical or excessively conservative, affecting intelligence of a driving decision. Therefore, reasonableness of timing of a lane change intention is evaluated before the vehicle executes the lane change action. This allows for quantitative descriptions of reasonableness of timing of a lane change decision and aggressiveness of a driving style in a real-time high-dynamic traffic scenario, thereby contributing to enhancement of intelligence of a driving decision.

In a possible implementation, a lane change timing evaluation value in each lane change time period is obtained, through calculation, based on the traveling status information of the vehicle, the traffic scenario information, and waiting duration from a moment at which the lane change intention is generated to a moment at which the lane change action starts. Certainly, the lane change occasion evaluation value may be calculated in another manner. This is not limited in this solution.

2022: Calculate, based on the traveling status information of the vehicle, the traffic scenario information, and the lane change intention execution result, an actual gain obtained from the completed lane change behavior in each lane change time period.

An actual gain obtained from the completed lane change behavior is relative to that of a non-lane-change behavior. If the gain is a positive value, a lane change currently performed by the vehicle is an effective lane change behavior. If the gain is a negative value, a lane change currently performed by the vehicle is an ineffective/inappropriate lane change behavior. The gain may be, for example, a speed gain and/or a position gain. The speed gain is a steady-state speed increment relative to a non-lane-change behavior. The position gain is an actual position advance relative to a non-lane-change behavior.

In a possible implementation, an actual speed gain and/or an actual position gain obtained by the vehicle from the completed lane change behavior in each lane change time period are/is calculated based on the traveling status information of the vehicle, the traffic scenario information, the lane change intention execution result, and respective traveling statuses of a first reference vehicle and a second reference vehicle at a lane change end moment, where the first reference vehicle includes sequential preceding and trailing vehicles of the vehicle at a lane change start moment, and the second reference vehicle includes sequential preceding and trailing vehicles of the vehicle at the lane change end moment.

The lane change intention execution result may be, for example, completion of a lane change action. The sequential preceding and trailing vehicles may be understood as a 1^{st} (nearest) vehicle, a 2^{nd} (second nearest) vehicle, ..., and an N^{th} vehicle (a vehicle that is in a preset distance range and that is located farthest in front of the to-be-evaluated vehicle, where N is a positive integer) that are located in a lane in which the to-be-evaluated vehicle is located and that are located in front of the to-be-evaluated vehicle, and a 1^{st} (nearest) vehicle, a 2^{nd} (second nearest) vehicle, ..., and an M^{th} vehicle (a vehicle that is in a preset distance range and that is located farthest behind the to-be-evaluated vehicle, where M is a positive integer) that are located in the lane in which the to-be-evaluated vehicle is located and that are located behind the to-be-evaluated vehicle. The first reference vehicle and the second reference vehicle may be a same vehicle. For example, before and after the to-be-evaluated vehicle changes a lane, vehicles traveling before and after the to-be-evaluated vehicle are a same vehicle. Alternatively, the first reference vehicle and the second reference vehicle are different vehicles. In other words, before and after the to-be-evaluated vehicle changes a lane, vehicles traveling before and after the to-be-evaluated vehicle are not completely the same, or are not the same. This is not limited in this solution.

In this solution, the following method is defined as an anchoring vehicle-following model method: It is assumed that a to-be-evaluated vehicle and sequential preceding and trailing vehicles of the vehicle can reach a stable traveling status at a lane change end moment, where the lane change end moment may also be a moment after specific duration since a lane change ends. An ID of a 1^{st} vehicle in front of the to-be-evaluated vehicle at a lane change start moment is anchored and the 1^{st} vehicle is denoted as an original preceding vehicle. The original preceding vehicle is searched for from the sequential preceding and trailing vehicles in an original lane at the lane change end moment, and a traveling status of the original preceding vehicle is obtained and denoted as an end status of the original preceding vehicle, where the traveling status is a traveling status of the vehicle present when the vehicle travels stably, and includes a steady-state speed, a position, and the like. In this case, a traveling speed of the to-be-evaluated vehicle in a non-lane-change case may be equivalent to a minimum value of a steady-state speed, a lane speed limit, and a maximum traveling speed of the to-be-evaluated vehicle at the end status of the original preceding vehicle; and a position of the to-be-evaluated vehicle in a non-lane-change case may be equivalent to a position x meters behind a position of the vehicle at the end status of the original preceding vehicle, where x indicates a stable vehicle-following interval for the to-be-evaluated vehicle. In addition, an ID of a 1^{st} vehicle in front of the to-be-evaluated vehicle at the lane change end moment is anchored, the 1^{st} vehicle is denoted as a new preceding vehicle, and a traveling status of the new preceding vehicle is obtained and denoted as an end status of the new preceding vehicle. In this case, a traveling speed of the to-be-evaluated vehicle after the lane change may be equivalent to a minimum value of a steady-state speed, a lane speed limit, and a maximum traveling speed of the to-be-evaluated vehicle at the end status of the new preceding vehicle; and a position of the to-be-evaluated vehicle after the lane change may be equivalent to a position x meters behind a position of the vehicle at the end status of the new preceding vehicle. Therefore, the end status of the original preceding vehicle can be compared with the end status of the new preceding vehicle to obtain an actual speed and/or position gain/loss of a lane change case/the non-lane-change case. If the original preceding vehicle also executes a lane change behavior in the time period, an i^{th} vehicle in front of the to-be-evaluated vehicle is anchored and denoted as an original preceding vehicle, where i indicates a vehicle that is in the sequential preceding vehicles of the to-be-evaluated vehicle and that is closest to the to-be-evaluated vehicle and does not execute the lane change behavior. If there are no sequential preceding vehicles of the to-be-evaluated vehicle or all sequential preceding vehicles of the to-be-evaluated vehicle execute the lane change behavior, sequential trailing vehicles of the to-be-evaluated vehicle may be anchored in a similar way.

For example, it is specified that a traffic flow status reaches a stable vehicle-following traveling status before the lane change intention is generated, and the moment is denoted as a moment t0, namely, a lane change start moment; and the traffic flow status at a moment of lane change completion or a moment Δt after lane change completion reaches the stable vehicle-following traveling status, and the moment is denoted as a moment t1, namely, a lane change end moment.

The anchoring vehicle-following model method is used to calculate an actual gain of a lane change behavior. Details are as follows:

A stable traveling status of the original preceding vehicle (namely, an initial state of the original preceding vehicle, a position s0, and/or a speed v0) in the sequential preceding and trailing vehicles of the to-be-evaluated vehicle (an ego vehicle) in the original lane at the lane change start moment (moment t0) is first anchored, and then an anchored traveling status of the original preceding vehicle (namely, an end status of the original preceding vehicle, a position s0", and/or a speed v0") in the original lane at a lane change completion moment t1 is obtained. The traveling status represents a stable traveling status of the ego vehicle in a non-lane-change case, that is, (s0 and/or v0) -> (s0" and/or v0"), and is used as a reference. In addition, a traveling status of the new preceding vehicle (namely, an end status of the new preceding vehicle, a position s0', and/or a speed v0') in the sequential preceding and trailing vehicles of the ego vehicle in a target lane (a lane in which the ego vehicle is located after the lane change is completed) at the lane change end moment (moment t1) is obtained. The traveling status represents a stable traveling status of the ego vehicle in a lane change case, that is, (s0 and/or v0) -> (s0' and/or v0'). Finally, an actual speed gain and/or an actual position gain of the lane change behavior are/is calculated based on the stable traveling status of the ego vehicle (the end status of the original preceding vehicle) in a non-lane-change case and the stable traveling status (the end status of the new preceding vehicle) of the ego vehicle in a lane change case.

If (v0'-v0")>Δv, it is considered that the actual speed gain is obtained from the lane change behavior, and a value of the actual speed gain is v0'-v0", where Δv is a specified speed gain threshold. If (s0'-s0")>Δs, it is considered that the actual position gain is obtained from the lane change behavior, and a value of the actual position gain is s0'-s0", where Δs is a specified position gain threshold. If an actual speed gain or an actual position gain is obtained from a lane change behavior, the efficient lane change is considered to be effective.

Further, in view of this, whether an efficiency gain is obtained from a single lane change and a value of the gain are evaluated. Further, statistical distribution of gains from all efficient lane changes in a pending evaluation time period is calculated, to describe a gain of all lane change behaviors of the vehicle in the pending evaluation time period, so as to describe an approximate level of an efficient lane change capability of the vehicle in executing the lane change behavior. For example, a higher proportion of lane change behavior whose gain reaches a specific threshold indicates a higher lane change behavior execution level. Alternatively, a part with a minimum lane change gain in statistical distribution may be obtained for scenario analysis, to obtain a scenario feature with a poor gain of executing the lane change behavior, and the scenario feature is used to screen scenario data for further targeted improvement of the efficient lane change capability of the vehicle.

In this example, according to the anchoring vehicle-following model method, a steady-state traveling status of the vehicle in a lane change time period is used to calculate an actual gain for posteriori evaluation, where the actual gain is obtained from an efficient lane change behavior. In this way, evaluation data is easy to collect, and impact of a traffic scenario is fully considered. In addition, multi-dimensional measurement and evaluation are performed, to enable complete, fast, accurate, and quantitative descriptions of a capability boundary and a minor version difference between lane change algorithms, and quantitative evaluation of intelligence of a lane change decision in a real-time high-dynamic traffic scenario. This helps improve an efficient lane change capability of the lane change algorithm in a corresponding scenario in a targeted manner, promote fast iteration and maturation of the lane change algorithm, and resolve an efficient evaluation problem of an advanced efficient lane change capacity in the autonomous driving field.

2023: Calculate, based on at least one of the lane change timing evaluation value corresponding to the completed lane change behavior in each lane change time period and the actual gain obtained from the completed lane change behavior in each lane change time period, the lane change effectiveness evaluation value corresponding to the completed lane change behavior in each lane change time period.

For example, the lane change effectiveness evaluation value corresponding to the completed lane change behavior in each lane change time period is calculated based on the lane change timing evaluation value corresponding to the completed lane change behavior in each lane change time period. Optionally, the lane change timing evaluation value corresponding to the completed lane change behavior in each lane change time period is directly used as the lane change effectiveness evaluation value corresponding to the completed lane change behavior in each lane change time period. Certainly, the lane change effectiveness evaluation value may alternatively be calculated according to a preset algorithm. This is not limited in this solution.

Alternatively, the lane change effectiveness evaluation value corresponding to the completed lane change behavior in each lane change time period is calculated based on the actual gain obtained from the completed lane change behavior in each lane change time period. Optionally, the actual gain obtained from the completed lane change behavior in each lane change time period is directly used as the lane change effectiveness evaluation value corresponding to the completed lane change behavior in each lane change time period. Certainly, the lane change effectiveness evaluation value may alternatively be calculated according to a preset algorithm. This is not limited in this solution.

Alternatively, the lane change effectiveness evaluation value corresponding to the completed lane change behavior in each lane change time period is calculated based on the lane change timing evaluation value corresponding to the completed lane change behavior in each lane change time period and the actual gain obtained from the completed lane change behavior in each lane change time period. Optionally, the lane change effectiveness evaluation value corresponding to the completed lane change behavior in each lane change time period is obtained, through calculation, based on the lane change timing evaluation value corresponding to the completed lane change behavior in each lane change time period, the actual gain obtained from the completed lane change behavior in each lane change time period, and a preset weight. Certainly, the lane change effectiveness evaluation value may alternatively be calculated according to a preset algorithm. This is not limited in this solution.

203: Calculate an efficient lane change capability score based on a lane change effectiveness evaluation value in the pending evaluation time period, where the lane change effectiveness evaluation value in the pending evaluation time period is obtained based on the lane change effectiveness evaluation value corresponding to the completed lane change behavior in each lane change time period.

The efficient lane change capability score is used to quantitatively evaluate the vehicle's ability to choose reasonable and appropriate timing for performing a lane change behavior, and may be further used to compare and grade different versions of lane change algorithms. The score may include a comprehensive overall score and a more detailed and comprehensive multi-dimensional sub-item performance score, for example, a lane change timing reasonableness score, a lane change position gain score, and a lane change speed gain score. A higher efficient lane change capability score indicates higher intelligence of an efficient lane change behavior of the vehicle, better driving experience, and more obvious improvement of overall traveling efficiency of the vehicle in the pending evaluation time period.

In a possible implementation, the lane change effectiveness evaluation value in the pending evaluation time period is directly used as the efficient lane change capability score. Certainly, the efficient lane change capability score may alternatively be calculated according to a preset algorithm. This is not limited in this solution.

In another possible implementation, a proportion of effective lane changes in the pending evaluation time period is determined based on a quantity and directions of all completed lane change behaviors in the pending evaluation time period, and an actual gain obtained. Then, the lane change effectiveness evaluation value in the pending evaluation time period is calculated based on the proportion of effective lane changes and the lane change effectiveness evaluation value corresponding to the completed lane change behavior in each lane change time period.

The directions of the completed lane change behaviors may be understood as directions of completed lane change behaviors that occur in a time sequence in the pending evaluation time period, and are used to consider impact between two consecutive completed lane change behaviors in a time sequence. For example, two consecutive lane changes in a same direction in very short time may cause traffic violation or poor driving experience; and two consecutive lane changes in opposite directions in very short time without overtaking a preceding vehicle in an original lane are considered as a redundant lane change behavior or an ineffective lane change behavior. The actual gain obtained may be, for example, a speed gain, a position gain, or a speed gain and a position gain.

The proportion of effective lane changes in the pending evaluation time period represents a proportion of efficient lane change behaviors whose actual gains are positive values in the pending evaluation time period in all lane change intentions generated by a lane change decision system, and may reflect reasonableness of an intention of the lane change decision system and a success rate of executing the lane change behavior.

For example, the proportion of effective lane changes is obtained, through calculation, by collecting statistics on a quantity of completed lane change behaviors in a lane change time period of the pending evaluation time period, an actual gain obtained, and a quantity of atypical lane change behaviors. The atypical lane change behavior may be understood as at least one of a lane change behavior corresponding to an ineffective lane change intention and a lane change behavior corresponding to a lane change failure. A sum of the quantity of completed lane change behaviors and the quantity of atypical lane change behaviors is calculated, to obtain a ratio of a quantity of completed lane change behaviors for which an actual gain obtained is a positive value, to the sum of the quantity of completed lane change behaviors and the quantity of atypical lane change behaviors. The ratio is the proportion of effective lane changes.

Optionally, the lane change effectiveness evaluation value in the pending evaluation time period is obtained through calculation based on the proportion of effective lane changes, the lane change effectiveness evaluation value corresponding to the completed lane change behavior in each lane change time period, and the preset weight. For example, it is assumed that an actual speed gain and an actual position gain that are obtained from the completed lane change behavior are r and r>0, and the proportion of effective lane changes is q and 0≤q≤1. It may be considered that a weight of the completed lane change behavior for which obtained actual speed gain and position gain are positive values is q. In this case, a weight of the atypical lane change behavior is 1-q, and a penalty value of the atypical lane change behavior is set to -p (p>0). Then, the lane change effectiveness evaluation value is determined based on the weight setting. For example, the lane change effectiveness evaluation value may be expressed as r*q+(-p)*(1-q). Certainly, the lane change effectiveness evaluation value may be determined in another manner. This is not limited in this solution.

In still another possible implementation, the efficient lane change capability score is obtained based on the lane change effectiveness evaluation value and at least one of an overall lane change efficiency evaluation value, a suppression loss evaluation value, an atypical lane change evaluation value, a topology constraint evaluation value, and a traffic scenario evaluation value in the pending evaluation time period.

The following separately describes (1) the overall lane change efficiency evaluation value, (2) the suppression loss evaluation value, (3) the atypical lane change evaluation value, (4) the topology constraint evaluation value, and (5) the traffic scenario evaluation value.

### (1) Overall lane change efficiency evaluation value

The overall lane change efficiency evaluation value represents an average traveling speed and a lane change execution frequency of the vehicle in the pending evaluation time period.

The lane change execution frequency may be understood as a quantity of lane change behaviors executed in unit time. Alternatively, the lane change execution frequency may be understood as a quantity of lane change behaviors executed in a unit traveling distance, or the like. In a possible implementation, the overall lane change efficiency evaluation value is calculated based on a total traveling distance, total traveling time, and a total quantity of lane changes of the vehicle in a total lane change time period of the pending evaluation time period. For example, the overall lane change efficiency evaluation value is obtained, through calculation, based on the total traveling distance, the total traveling time, the total quantity of lane changes of the vehicle in the total lane change time period of the pending evaluation time period, a preset weight, and the like. Certainly, the overall lane change efficiency evaluation value may alternatively be calculated according to another algorithm. This is not limited in this solution.

### (2) Suppression loss evaluation value

The suppression loss evaluation value represents a loss value corresponding to a non-lane-change behavior of the vehicle in a scenario in which a lane change condition is met and a significant speed gain or a significant position gain can be obtained after a lane change is performed.

In a possible implementation, the pending evaluation time period further includes a non-lane-change time period. A suppression loss evaluation value generated due to non-execution of a lane change action in each non-lane-change time period is calculated in each non-lane-change time period of the pending evaluation time period based on the traveling status information of the vehicle and the traffic scenario information. Then, a suppression loss evaluation value in the pending evaluation time period is obtained based on the suppression loss evaluation value generated due to non-execution of the lane change action in each non-lane-change time period.

A lane change time period and the non-lane-change time period may be separately considered as a complete lane decision process. Therefore, when a lane change effectiveness gain is evaluated in the lane change time period and a low-speed suppression loss is evaluated in the non-lane-change time period, a vehicle traveling status at a start moment and an end moment of a corresponding time period is used for evaluation, to evaluate a gain and a loss of the lane decision process in the time period. This can avoid microscopic impact caused by a real-time dynamic change in traffic flow in the time period on an evaluation result, make the evaluation result of this solution more macroscopic, and improve accuracy and universality of the evaluation result. In addition, the lane change time period and the non-lane-change time period can cover an entire pending evaluation time period in all scenarios. Therefore, this solution is applicable to evaluation of a lane change behavior and a non-lane-change behavior in all scenarios.

### (3) Atypical lane change evaluation value

The atypical lane change behavior may be understood as at least one of a lane change behavior corresponding to an ineffective lane change intention and a lane change behavior corresponding to a lane change failure. For example, the atypical lane change behavior includes a lane change corresponding to at least one of a lane change intention jump, a lane change failure, back-and-forth lane changes, and consecutive lane changes in a same direction.

The atypical lane change evaluation value includes an evaluation value corresponding to at least one of the lane change intention jump, the lane change failure, the back-and-forth lane changes, and the consecutive lane changes in a same direction.

In a possible implementation, an atypical lane change evaluation value in each lane change time period of the pending evaluation time period is determined based on the traveling status information of the vehicle, the lane change intention corresponding to the lane change decision instruction, lane change behavior information that no lane change action is generated or a lane change action exists but is not completed corresponding to the lane change intention execution result, information that two consecutive lane change behaviors in the pending evaluation time period are in a same direction or in opposite directions, and information about a time interval and/or a distance interval between the two consecutive lane change behaviors.

The information about the time interval between the two consecutive lane change behaviors may be corresponding duration from an end moment of a previous lane change to a start moment of a next lane change in the two consecutive lane change behaviors. The information about the distance interval between the two consecutive lane change behaviors may be a corresponding distance from an end moment of a previous lane change to a start moment of a next lane change in the two consecutive lane change behaviors. Based on the obtained traveling status information of the vehicle and the lane change intention corresponding to the lane change decision instruction, statistics are collected on a case in which no corresponding lane change behavior is generated or a generated lane change behavior is not completed in a high-dynamic traffic scenario, to evaluate a lane change behavior with an incomplete trajectory such as an ineffective intention/the intention jump, a lane change cancellation, or the lane change failure. Based on a plurality of continuous lane change behaviors completed by the vehicle, a time interval between the lane change behaviors, and a distance interval between the lane change behaviors, statistics are collected on a coupled lane change behavior such as consecutive lane changes in a same direction and back-and-forth lane changes in opposite directions.

The atypical lane change behaviors can affect intelligence evaluation of a lane change capability of the vehicle and driving experience of an autonomous driving system. Therefore, a statistical result of such a non-best-experience lane change behavior also affects the efficient lane change capability score. In addition, the statistical result of this type of lane change behavior also constitutes a part of the capability boundary of the lane change algorithm, and is used by the lane change algorithm to improve a capability in a corresponding scenario in a targeted manner.

### (4) Topology constraint evaluation value

The topology constraint evaluation value represents an evaluation value corresponding to at least one of a lane change in violation of a traffic regulation, a lane change that results in a departure from a navigation lane, and the like.

In a possible implementation, the topology constraint evaluation value is calculated based on at least one of information that the vehicle departs from a navigation lane, information about a lane change across a solid line, and information about occupation of a dedicated lane such as a bus lane.

For example, according to whether the vehicle violates a traffic regulation, a navigation target, a navigation route, a preset weight, and the like, a lane change behavior that violates a topology constraint, such as a lane change that results in a departure from the navigation target, the lane change across a solid line, and illegal occupation of a dedicated lane, are collected and evaluated, to calculate the topology constraint evaluation value. Certainly, the topology constraint evaluation value may alternatively be calculated according to another algorithm. This is not limited in this solution.

### (5) Traffic scenario evaluation value

The traffic scenario evaluation value represents an evaluation value corresponding to the traffic scenario information. The traffic scenario information may be, for example, a high speed, an urban area, congestion, or emptiness, and may further include vehicle traveling information. This is not limited in this solution.

In order to achieve different optimization objectives in different traffic scenarios, according to the lane change algorithm, different traffic scenario evaluation values may be configured for various traffic scenarios, to better guide the lane change algorithm to be applicable to a plurality of different traffic scenarios and achieve a predetermined optimization objective.

The efficient lane change capability score is obtained through calculation based on the lane change effectiveness evaluation value and at least one of the overall lane change efficiency evaluation value, the suppression loss evaluation value, the atypical lane change evaluation value, the topology constraint evaluation value, and the traffic scenario evaluation value. Optionally, the efficient lane change capability score=the traffic scenario evaluation value*(w1*the overall lane change efficiency evaluation value+w2*the lane change effectiveness evaluation value+w3*the suppression loss evaluation value+w4*the atypical lane change evaluation value+w5*the topology constraint evaluation value), where w1, w2, w3, w4, and w5 are weight values, and w1+w2+w3+w4+w5=1.

In this example, traveling status information of the vehicle in a time period is obtained based on a vehicle traveling trajectory, a lane change decision instruction, road scenario information, and a real-time traffic flow status in real-time collection data, and an efficient lane change capability score is obtained through measurement from the perspectives of reasonableness of timing of a lane change intention, a quantity of uncompleted lane change behaviors, an actual efficiency gain from a lane change, and a low-speed suppression efficiency loss and through comprehensive scoring, so that a detailed evaluation report may be further output. This can implement lane change capability evaluation of a driving lane change algorithm such as human driving, an expert system, supervised learning, and reinforcement learning, measure intelligence and driving experience of the efficient lane change capability of the vehicle, and quickly explore a capability boundary of the lane change algorithm. For example, capability boundaries, advantages, and disadvantages of different algorithms are accurately and quantitatively evaluated based on the efficient lane change capability score and the detailed evaluation report that are output, to distinguish subtle differences between the different algorithms and quickly explore the capability boundaries of the lane change algorithms. In addition, during evaluation, based on the detailed evaluation report of the lane change algorithms, forward and reverse lane change data (such as data with a small lane change gain and data in a long-suppression time period) in a corresponding scenario can be extracted in a targeted manner for performance analysis and used as data-driven algorithm training/test data, to improve version iteration efficiency.

In this embodiment of this application, the traveling status information of the vehicle and the traffic scenario information in the pending evaluation time period are determined based on the vehicle traveling trajectory, the lane change decision instruction, the road scenario information, and the real-time traffic flow status. Then, the lane change effectiveness evaluation value corresponding to the completed lane change behavior in each lane change time period is calculated in each lane change time period of the pending evaluation time period. Then, the efficient lane change capability score is calculated based on the lane change effectiveness evaluation value in the pending evaluation time period. In this manner, the lane change effectiveness evaluation value corresponding to the completed lane change behavior in the pending evaluation time period is evaluated, to quantify the efficient lane change capability score. This enables more efficient, rapid, objective, and accurate measurement of whether an efficient lane change of a human-driven vehicle or an autonomous vehicle is reasonable and effective.

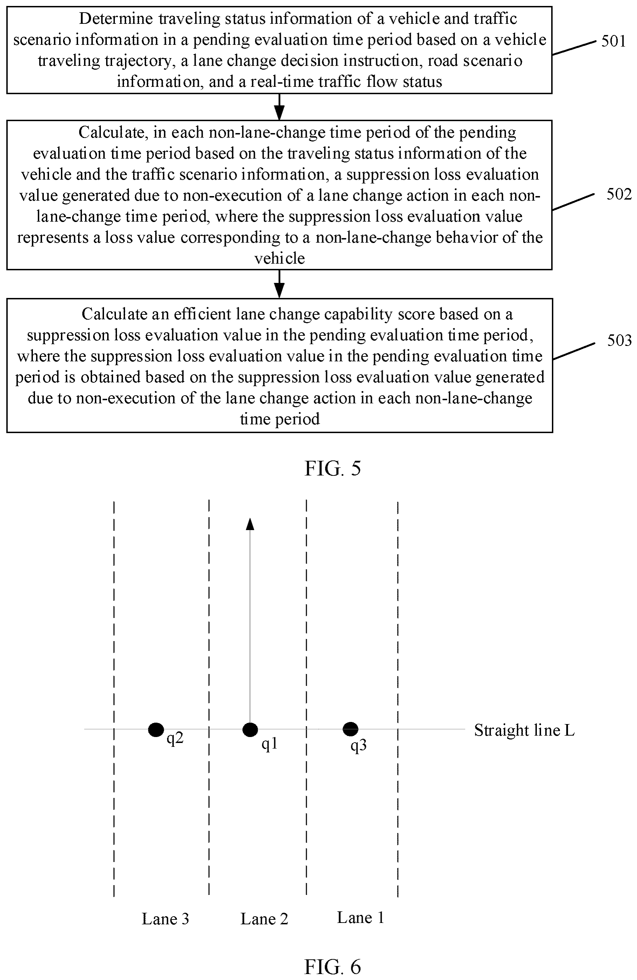

FIG. 5 is a schematic flowchart of another method for evaluating an efficient lane change capability according to an embodiment of this application. Optionally, the method may be applied to the foregoing system for evaluating an efficient lane change capability, for example, the system for evaluating an efficient lane change capability shown in FIG. 1a. The method for evaluating an efficient lane change capability shown in FIG. 5 may include steps 501 to 503. It should be understood that, for ease of description in this application, a sequence of 501 to 503 is used for description, but this is not intended to limit execution that is necessary in the foregoing sequence. An execution sequence, execution time, a quantity of execution times, and the like of the foregoing one or more steps are not limited in embodiments of this application. The following uses an example in which steps 501 to 503 in the method for evaluating an efficient lane change capability are performed by a server for description. This application is also applicable to other execution bodies. Steps 501 to 503 are specifically as follows:

501: Determine traveling status information of a vehicle and traffic scenario information in a pending evaluation time period based on a vehicle traveling trajectory, a lane change decision instruction, road scenario information, and a real-time traffic flow status.

For descriptions of this part, refer to descriptions of step 201 in the embodiment shown in FIG. 2. Details are not described herein again.

502: Calculate, in each non-lane-change time period of the pending evaluation time period based on the traveling status information of the vehicle and the traffic scenario information, a suppression loss evaluation value generated due to non-execution of a lane change action in each non-lane-change time period, where the suppression loss evaluation value represents a loss value corresponding to a non-lane-change behavior of the vehicle.

In a possible implementation, a suppression loss value of the vehicle in each non-lane-change time period is obtained, through calculation, based on the traveling status information of the vehicle, the traffic scenario information, and traveling status information of a third reference vehicle and a fourth reference vehicle. The suppression loss value may include a speed suppression loss value and/or a position suppression loss value. The third reference vehicle includes sequential preceding and trailing vehicles of the vehicle in a first reference lane. The first reference lane is a lane in which the vehicle is located. The fourth reference vehicle includes sequential preceding and trailing vehicles relative to a position that is in a second reference lane and that corresponds to the vehicle. The second reference lane is a lane to which the vehicle is changeable. The corresponding position is a position that is in the second reference lane and that corresponds to a position of the vehicle. For descriptions of the sequential preceding and trailing vehicles, refer to descriptions of step 2022 in the embodiment shown in FIG. 2. Details are not described herein again. The position that is in the second reference lane and that corresponds to the position of the vehicle may be understood as a position, intersecting a first straight line, in a lane to which the vehicle is changeable. The first straight line is a straight line that passes through the position of the vehicle and that is perpendicular to a direction of a road on which the vehicle is located. As shown in FIG. 6, the vehicle is at a position q1 of a lane 2, and a straight line L perpendicular to a direction of the lane is drawn by using the position q1, where L intersects a lane 1, the lane 2, and a lane 3. In other words, a position q3 in the lane 1 and a position q2 in the lane 3 each are a position that is in the second reference lane and that corresponds to the position of the vehicle.

For example, as shown in FIG. 3, the non-lane-change time period is a time period corresponding to a process in which the vehicle starts to travel back to the middle of the lane -> the lane change intention is generated. It is specified that a traffic flow status at a moment of lane change completion or a moment Δt after lane change completion reaches a stable vehicle-following traveling status, and the moment is denoted as a moment t1, namely, a lane change end moment or a start moment of a non-lane-change time period; and the traffic flow status reaches the stable vehicle-following traveling status before a next lane change intention is generated, and the moment is denoted as a moment t2, namely, an end moment of the non-lane-change time period or a start moment of a next lane change time period.

According to an anchoring vehicle-following model method, a stable traveling status of an original preceding vehicle (namely, an initial state of the original preceding vehicle, a position s0, and/or a speed v0) in sequential preceding and trailing vehicles of an ego vehicle in an original lane at the moment t1 is first anchored, and then an anchored real-time traveling status of the original preceding vehicle (namely, an end status of the original preceding vehicle, a position s0", and/or a speed v0") in each frame of a scenario in a time period from t1 to t2 is obtained. The traveling status represents a stable traveling status in which the ego vehicle does not change a lane, that is, (s0 and/or v0) -> (s0" and/or v0"), and is used as a reference. In addition, a real-time traveling status of a new preceding vehicle (namely, an end status of the new preceding vehicle, a position s0', and/or a speed v0') in sequential preceding and trailing vehicles in a candidate target lane (a lane that the vehicle can change to, either to the left or the right) is obtained. The traveling status represents a stable traveling status after the ego vehicle changes to the candidate target lane, that is, a status of a left candidate target lane is (s0 and/or v0) -> (s_l0' and/or v_l0'), and a status of a right candidate target lane is (s0 and/or v0) -> (s_r0' and/or v_r0'). Finally, a speed suppression loss and/or a position suppression loss of each frame of a non-lane-change behavior are/is calculated accordingly: If (v_l0'-v0")>Δv or (v_r0'-v0")>Δv, it is considered that the frame of behavior of not changing a lane to the left or the right generates a speed suppression loss, where Δv is a specified speed loss threshold; or if (s_l0'-s0")>Δs and (s_r0'-s0")>Δs, it is considered that a low-speed suppression behavior of not changing a lane to the left or the right does not generate a position suppression loss, where Δs is a specified position loss threshold; or if there are a speed suppression loss and a position suppression loss, the frame is a low-speed suppression frame.

In a time period from t1 to t2, all moments for which a previous frame is not a low-speed suppression frame but a next frame is a low-speed suppression frame are denoted as tk1, namely, a start frame of a low-speed suppression time period tk; and all moment for which a previous frame is a low-speed suppression frame but a next frame is not a low-speed suppression frame are denoted as tk2, namely, an end frame of the low-speed suppression time period tk, where k=0, 1, 2, .... It can be learned that there are k segments of consecutive low-speed suppression frames in the time period from t1 to t2, and duration is denoted as tk=tk2-tk1. If tk>ΔT, it is considered that consecutive low-speed suppression occurs in the time period, and a cumulative speed and/or position suppression loss may be generated in the consecutive low-speed suppression time period tk. In view of this, cumulative speed and/or position suppression losses in the consecutive suppression time periods and distribution of the cumulative speed and/or position suppression losses may be calculated, and suppression severity statistics are collected based on consecutive suppression duration, so that a conservative degree and an aggressive degree of a lane change behavior of the vehicle can be effectively and quantitatively evaluated.

Then, a long-time suppression loss value in each non-lane-change time period is calculated based on the suppression loss value in each non-lane-change time period and duration of each non-lane-change time period of the pending evaluation time period.

A proportion of suppression duration in each non-lane-change time period is calculated based on the duration of each non-lane-change time period, a control frequency of the lane change decision instruction, and the suppression loss value. The proportion of suppression duration describes an overall suppression status of the vehicle under the action of a lane change algorithm to be evaluated, namely, a conservative degree or an aggressive degree of a lane change. The proportion of suppression duration may also be referred to as a proportion of suppression frames, and may be represented as a percentage, of a total quantity of low-speed suppression frames in all lane change decision instruction control frames included in the pending evaluation time period, in a total quantity of valid frames in an entire pending evaluation time period.

Finally, the suppression loss evaluation value generated due to non-execution of the lane change action in each non-lane-change time period is calculated based on at least one of the suppression loss value in each non-lane-change time period, the long-time suppression loss value, and the proportion of suppression duration.

In this example, according to the anchoring vehicle-following model method, a steady-state traveling status of the vehicle in a non-lane-change time period is used to calculate a low-speed suppression loss for posteriori evaluation. In this way, evaluation data is easy to collect, and impact of a traffic scenario is fully considered. In addition, multi-dimensional measurement and evaluation are performed, to enable complete, fast, accurate, and quantitative descriptions of a capability boundary and a minor version difference between lane change algorithms, and quantitative evaluation of intelligence of a lane change decision in a real-time high-dynamic traffic scenario. This helps improve an efficient lane change capability of the lane change algorithm in a corresponding scenario in a targeted manner, promote fast iteration and maturation of the lane change algorithm, and resolve an efficient evaluation problem of an advanced efficient lane change capacity in the autonomous driving field.

503: Calculate an efficient lane change capability score based on a suppression loss evaluation value in the pending evaluation time period, where the suppression loss evaluation value in the pending evaluation time period is obtained based on the suppression loss evaluation value generated due to non-execution of the lane change action in each non-lane-change time period.

In a possible implementation, a proportion of suppression duration in the pending evaluation time period is obtained based on the proportion of suppression duration in each non-lane-change time period. Then, the suppression loss evaluation value in the pending evaluation time period is calculated based on the suppression loss evaluation value generated due to non-execution of the lane change action in each non-lane-change time period and the proportion of suppression duration in the pending evaluation time period.

For example, the suppression loss evaluation value in the pending evaluation time period is obtained, through calculation, based on the suppression loss evaluation value generated due to non-execution of the lane change action in each non-lane-change time period, the proportion of suppression duration in the pending evaluation time period, and a preset weight.

In another possible implementation, the efficient lane change capability score is obtained based on the suppression loss evaluation value and at least one of an overall lane change efficiency evaluation value, a lane change effectiveness evaluation value, an atypical lane change evaluation value, a topology constraint evaluation value, and a traffic scenario evaluation value in the pending evaluation time period.

For descriptions of the overall lane change efficiency evaluation value, the lane change effectiveness evaluation value, the atypical lane change evaluation value, the topology constraint evaluation value, and the traffic scenario evaluation value in the pending evaluation time period, refer to descriptions in the embodiment shown in FIG. 2. Details are not described herein again.

In this embodiment of this application, the traveling status information of the vehicle and the traffic scenario information in the pending evaluation time period are determined based on the vehicle traveling trajectory, the lane change decision instruction, the road scenario information, and the real-time traffic flow status. Then, in each non-lane-change time period of the pending evaluation time period, the suppression loss evaluation value in each non-lane-change time period that is generated due to non-execution of a lane change action is calculated. Then, the efficient lane change capability score is calculated based on the suppression loss evaluation value in the pending evaluation time period. In this manner, the suppression loss evaluation value generated due to non-execution of the lane change action in the pending evaluation time period is evaluated, to quantify an efficient lane change capability score. This enables more efficient, rapid, objective, and accurate measurement of whether an efficient lane change of a human-driven vehicle or an autonomous vehicle is reasonable and effective.

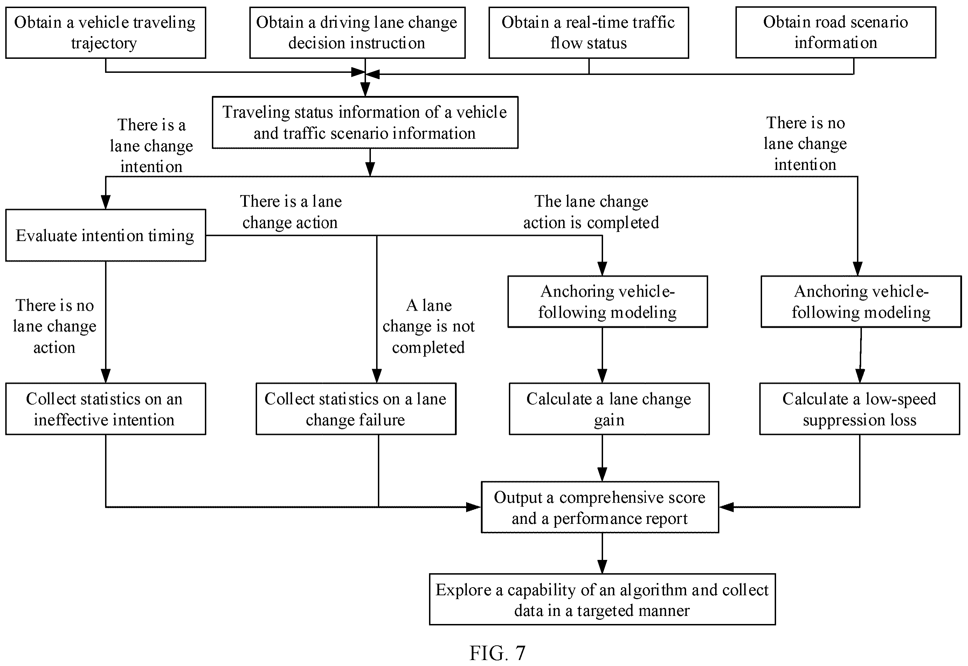

With reference to FIG. 7, the following uses an example in which an efficient lane change capability of an autonomous vehicle that is generated by a reinforcement learning-based lane change algorithm in a high-speed traffic scenario is evaluated for description. In this example, simulated lane change data of a 300 km road section in a high-speed dense traffic flow scenario is used as autonomous driving data in a pending evaluation time period. Information that can be obtained includes a real-time speed of a vehicle, traveling trajectory information, lane change decision information finally output by an autonomous driving system, road topology information such as a lane around an ego vehicle and a speed limit, and navigation task information of a current autonomous driving task.

S1: Divide a lane change evaluation time period. Based on the simulated lane change data of the 300 km road section in the high-speed dense traffic flow scenario, the lane change evaluation time period is divided into several lane change time periods and non-lane-change time periods based on the following principle: a lane change intention starts to be generated -> the vehicle travels back to the middle of a lane or the vehicle starts to travel back to the middle of the lane -> the lane change intention is generated, as shown in FIG. 3. For each lane change time period or each non-lane-change time period, information such as speeds of an ego vehicle and a plurality of surrounding vehicles around the ego vehicle, positions of the surrounding vehicles relative to the ego vehicle, and lanes in which the ego vehicle and the surrounding vehicles are located is obtained; real-time lane change decision information and navigation task information of the vehicle are obtained based on a lane change decision instruction of the autonomous driving system and lane change turn signal activation information; and topology information such as a quantity of lanes, a lane speed limit, and types (a dashed line or a solid line) and lengths of left and right lanes are obtained based on local environment information of a current scenario.

S2: Evaluate reasonableness of lane change timing. For a lane change time period, as shown in FIG. 4, an autonomous driving system of a vehicle generates a decision of changing a lane to the left or to the right in a traveling process. As shown in a-1 in FIG. 4, an intention of changing a lane to the left is generated for a period of time according to the reinforcement learning-based lane change algorithm of the autonomous driving system. However, before a lane change action starts to be executed, an ego vehicle is affected by a vehicle on the left and cannot complete a lane change behavior, resulting in cancellation of the intention of changing a lane to the left. This causes one intention jump/intention cancellation, and also demonstrates that generation timing of the lane change intention is unreasonable. The intention jump/intention cancellation is included in a current evaluation report.

As shown in a-2 in FIG. 4, a lane change action starts to be executed after the intention of changing a lane to the left is generated again for a period of time according to the reinforcement learning-based lane change algorithm of the autonomous driving system. However, due to a vehicle rapidly accelerating and approaching from the rear side, there is a risk of a rear-end collision if the ego vehicle continues the lane change. Consequently, the lane change behavior cannot be completed, resulting in a failure to change a lane to the left and a return to an original lane. This causes one lane change behavior failure and also demonstrates that generation timing of the lane change intention is excessively aggressive and unreasonable. The lane change behavior failure is included in the current evaluation report.

As shown in a-3 in FIG. 4, a lane change action starts to be executed after the intention of changing a lane to the left is generated again for a period of time according to the reinforcement learning-based lane change algorithm of the autonomous driving system. The ego vehicle finally successfully changes a lane to the left, reaches the left lane (a target lane), and straightens the vehicle body. Therefore, one successful lane change behavior is generated, the lane change intention is determined as an effective lane change intention, and reasonableness of timing is measured based on waiting time from a moment at which the lane change intention is generated to a moment at which the lane change intention starts to be executed. If the waiting time for the intention is too long, it indicates that the intention is generated too early. If the waiting time for the intention is too short, for example, the intention is generated only when the ego vehicle is close to a preceding vehicle, and consequently the lane change behavior is executed too urgently, it indicates that the intention is generated too late. Effectiveness and waiting time of the intention are also included in the current evaluation report.

S3: Collect statistics on an atypical lane change behavior. In the foregoing evaluation of reasonableness of lane change timing, a lane change behavior with an incomplete trajectory, such as an intention jump/intention cancellation, a lane change cancellation, and a lane change failure in a high-dynamic traffic scenario is collected and included in the current evaluation report.

In addition, for a successful lane change behavior, a lane change direction (left/right), a type of a lane line crossed in a lane change process, a type of a target lane, time and distance intervals between an end moment of a former lane change and a start moment of a latter lane change, and the like are recorded. If the lane change direction deviates from a navigation target direction, or the type of a lane line crossed in a lane change process is a solid line, or a type of an occupied target lane is a dedicated lane such as a bus lane, a tidal lane, or a high-speed overtaking lane, the lane change behavior violates a topology constraint and should be included in the current evaluation report. If the time and distance intervals between the end moment of the former lane change and the start moment of the latter lane change are not long enough, and directions of two consecutive lane changes are the same, the two lane change behaviors are consecutive lane changes in a same direction, potentially resulting in violation of traffic regulations or poor driving experience. If directions of two consecutive lane changes are opposite, and there is no change in sequential preceding and trailing vehicles of the ego vehicle (that is, no preceding vehicle is overtaken), the two lane change behaviors are ineffective back-and-forth lane changes. The consecutive lane change behaviors in a same direction and the ineffective back-and-forth lane change behaviors should also be included in the current evaluation report.

S4: Calculate a lane change gain according to an anchoring vehicle-following model method. In a scenario in which a lane change may be performed or may not be performed, if the time period is a lane change completion time period, an actual position and/or a steady-state speed that can be achieved by the vehicle by performing a lane change behavior is obtained according to the anchoring vehicle-following model method and based on traveling status information of the vehicle, a lane change intention that is output through decision, and a lane change action completion status, and an actual speed gain and/or an actual position gain obtained from a lane change behavior are/is calculated based on a position and/or a steady-state speed corresponding to a case in which a lane change behavior is not performed, to accurately measure an actual gain of a single efficient lane change behavior.

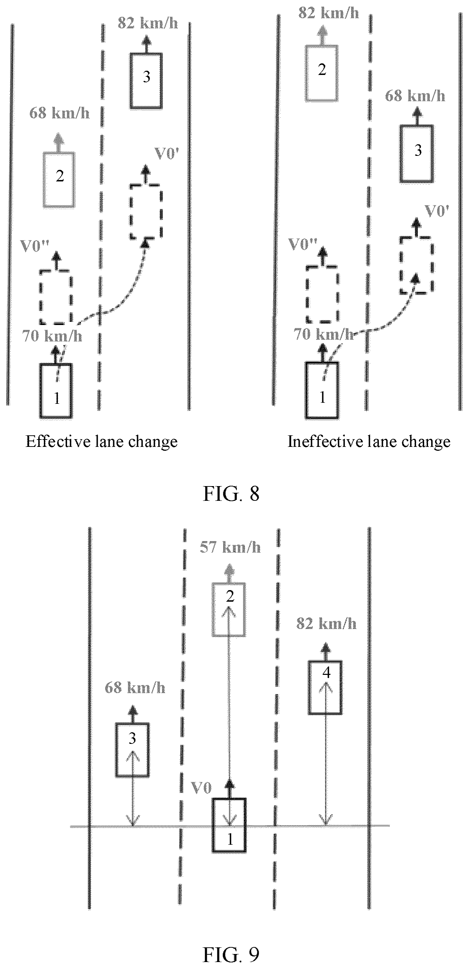

As shown in FIG. 8, a vehicle 1 represents a test vehicle, a vehicle 2 represents an original preceding vehicle in sequential preceding and trailing vehicles of the ego vehicle in an original lane before a lane change, and a vehicle 3 represents a new preceding vehicle in sequential preceding and trailing vehicles of the ego vehicle in a target lane after the lane change is completed. Therefore, at a moment t1 (lane change end moment), a traveling status of the vehicle 2 (an end status of the original preceding vehicle) may be considered as a traveling status of the test vehicle without the lane change at the moment, namely, a position and a speed (s0"/v0") of the test vehicle in the case of a non-lane-change decision; and at the moment t1 (lane change end moment), a traveling status of the vehicle 3 (an end status of the new preceding vehicle) may be considered as an actual traveling status of the test vehicle after the lane change at the moment (in a stable vehicle-following case, it is considered that a speed of the test vehicle is the same as that of the new preceding vehicle, and a position of the test vehicle is a stable vehicle-following distance (x meters) behind a position of the new preceding vehicle), namely, an actual position and an actual speed (s0'/v0') that can be reached by the test vehicle in the case of a lane change decision.

For an effective lane change in FIG. 8, a speed of the vehicle 3 is greater than that of the vehicle 2 and a relative position of the vehicle 3 is further forward (v0'=82 km/h>v0"=68 km/h, s0'>s0"). Therefore, the lane change obtains a speed gain and a position gain, and is an effective efficient lane change behavior. The speed gain is a steady-state speed increment relative to a non-lane-change case, that is, (v0'-v0"=82 km/h-68 km/h=14 km/h). The position gain is an actual position advance relative to the non-lane-change case, that is, (s0'-s0"). For an ineffective lane change in FIG. 8, a speed of the vehicle 3 is less than that of the vehicle 2 and a relative position of the vehicle 3 is further backward (v0'=68 km/h<v0"=82 km/h, s0'<s0"). Therefore, the lane change does not obtain a speed gain or a position gain and is an ineffective efficient lane change behavior.

In an entire efficient lane change capability evaluation time period of a 300 km road section in a high-speed scenario, a traveling status before a lane change (s0/v0), a traveling status after the lane change (s0'/v0'), lane change effectiveness, lane change speed gain and position gain (v0'-v0', s0'-s0), a lane change direction, and the like in all successful lane change time periods are included in the current evaluation report. Then, statistical distribution of all efficient lane change gains is calculated, to describe an overall level of a lane change capability of the autonomous driving reinforcement learning algorithm.

S5: Calculate a low-speed suppression loss according to the anchoring vehicle-following model method. In a scenario in which a lane change condition is met, especially a preceding vehicle is a vehicle at a low speed, if the time period is a non-lane-change time period, and a lane change decision instruction of a vehicle does not generate a lane change intention in a specific period of time, an actual position or a steady-state speed that can be reached by the vehicle without a lane change is obtained according to the anchoring vehicle-following model method and based on traveling status information of the vehicle and traffic scenario information, and a speed gain and a position gain actually generated by a non-lane-change behavior is calculated based on a corresponding position and a corresponding steady-state speed of a behavior of changing a lane to the left and/or to the right, to measure cumulative suppression duration and an actual suppression loss in the low-speed suppression time period.

As shown in FIG. 9, a vehicle 1 represents a test vehicle, a vehicle 2 represents an original preceding vehicle in sequential preceding and trailing vehicles of the ego vehicle in an original lane at a start moment of a non-lane-change behavior, and a vehicle 3 and a vehicle 4 represent left and right new preceding vehicles in sequential preceding and trailing vehicles of the ego vehicle in left and right candidate target lanes at an end moment of the non-lane-change behavior. Therefore, in each frame of a time period from t1 to t2, a traveling status of the vehicle 2 (an end status of the original preceding vehicle) may be considered as a traveling status of the test vehicle without the lane change at the moment, namely, an actual position and an actual speed (s0"/v0") that can be reached by the test vehicle in the case of a non-lane-change decision, and traveling statuses of the vehicle 3 and the vehicle 4 (an end status of the left new preceding vehicle and an end status of the right new preceding vehicle) may be considered as a traveling status of the test vehicle after the lane change at the moment (in a stable vehicle-following case, it is considered that a speed of the test vehicle is the same as that of the new preceding vehicle, and a position of the test vehicle is a stable vehicle-following distance (x meters) behind a position of the new preceding vehicle), namely, a steady-state position and a steady-state speed (s0'/v0') that can be reached by the test vehicle in the case of a lane change decision.

In FIG. 9, speeds of the vehicle 3 in the left lane and the vehicle 4 in the right lane are both greater than that of the vehicle 2 (v_10'=68 km/h>v0"=57 km/h, v _r0'=82 km/h>v0"=57 km/h). Consequently, the frame of behavior of not changing a lane generates a speed suppression loss, and the speed suppression loss is a larger value in cumulative steady-state speed increments that can be obtained relative to a behavior of changing a lane to the left and to the right, that is, (v_r0'-v0"=82 km/h-57 km/h=25 km/h>v_l0'-v0"=68 km/h-57 km/h=11 km/h). Positions of the vehicle 3 in the left lane and the vehicle 4 in the right lane are both behind that of the vehicle 2 (s_l0'<s0", s_r0'<s0"). Therefore, the frame of behavior of not changing a lane does not generate a speed suppression loss, and is not a low-speed suppression frame.

In an entire efficient lane change capability evaluation time period of a 300 km road section in a high-speed scenario, low-speed suppression statistics are collected by segment in all non-lane-change time periods. In each non-lane-change time period from t1 to t2, a start moment tk1 and an end moment tk2 of all k consecutive low-speed suppression time periods tk, low-speed suppression duration tk=tk2-tk1, a suppression severity level corresponding to the low-speed suppression duration, and a cumulative speed suppression loss and a cumulative position suppression loss generated in the consecutive low-speed suppression time period tk are included in the current evaluation report, where k=0, 1, 2.... In view of this, cumulative speed and position suppression losses in the consecutive suppression time periods and distribution of the cumulative speed and position suppression losses may be calculated, and suppression severity statistics are collected based on consecutive suppression duration, so that a conservative degree and an aggressive degree of a lane change behavior of the vehicle can be effectively and quantitatively evaluated.

S6: Output an efficient channel change capability score and a detailed performance report. Statistics on a total traveling distance, total traveling time, a total quantity of lane changes, and the like in an entire efficient lane change capability evaluation time period of a 300 km road section in a high-speed scenario are collected, an average traveling speed, a lane change frequency (kilometer/times, times/kilometer, hours/times, or times/hour), and the like in the entire lane change evaluation time period are calculated. An efficient lane change capability is scored based on the foregoing statistics and evaluation indicators and a detailed performance evaluation report is output.

A calculation formula for the efficient lane change capability score TotalCost may be expressed as follows:

TotalCost=Coef traffic scenario*(W1*Cost total efficiency+W2*Cost lane change effectiveness+W3*Cost suppression loss+W4*Cost atypical lane change+W5*Cost topology constraint). W1+W2+W3+W4+W5=1.

In order to achieve different optimization objectives in different traffic scenarios, according to the lane change algorithm, different score weights may be set for Cost evaluation values in different traffic scenarios, to better guide the lane change algorithm to be applicable to a plurality of different traffic scenarios and achieve a predetermined optimization objective, where
Coef traffic scenario={Coef high speed, Coef urban area, Coef congestion, Coef open area, and the like};
Cost total efficiency=1 (Cost average traveling speed, Cost lane change frequency, and the like);
Cost effectiveness=2 (Cost proportion of effective lane changes, Cost lane change speed gain, Cost lane change position gain, and Cost reasonableness of a lane change timing, and the like);
Cost suppression loss=3 (Cost proportion of suppression duration, Cost speed suppression loss, Cost position suppression loss, Cost consecutive suppression duration, and Cost suppression severity, and the like);
Cost non-typical lane change=4 (Cost intention jump, Cost lane change failure, Cost lane change cancellation, Cost consecutive lane changes in a same direction, and Cost back-and-forth lane changes in opposite directions, and the like); and
Cost topology constraint=5 (Cost deviation from a navigation target, Cost lane change across a solid line, and Cost occupation of a dedicated lane, and the like).

The efficient lane change capability is evaluated based on simulated scenario data of the 300 km road section in the high-speed dense traffic flow scenario, so that an efficient lane change capability of the reinforcement learning-based lane change algorithm of the autonomous driving system in a high-speed dense traffic scenario can be improved, for example, Coef traffic scenario may be set to Coef high speed*Coef congestion. Based on the foregoing weight setting and calculation of each evaluation value indicator, an evaluation result output in this example can be used to more accurately evaluate a lane change effect in high-speed dense traffic flow.

In this example, according to the anchoring vehicle-following model method, a steady-state traveling status of a vehicle in a lane change time period and a non-lane-change time period is used to calculate gains and losses of a lane change and low-speed suppression for posteriori evaluation. In this way, evaluation data is easy to collect, and impact of a traffic scenario is fully considered. Users can optionally perform measurement and evaluation from a plurality of dimensions such as a total evaluation mileage, an average traveling speed, a lane change frequency, a proportion of effective lane changes, a lane change speed gain, a lane change position gain, a proportion of suppression duration, a speed suppression loss, a position suppression loss, consecutive suppression duration, a suppression severity, an intention jump, a lane change failure, a lane change cancellation, consecutive lane changes in a same direction, back-and-forth lane changes in opposite directions, deviation from a navigation target, a lane change across a solid line, and occupation of a dedicated lane, to enable complete, fast, accurate, and quantitative descriptions of a capability boundary and a minor version difference between lane change algorithms, and quantitative evaluation of intelligence of a lane change decision in a real-time high-dynamic traffic scenario. This helps improve an efficient lane change capability of the lane change algorithm in a corresponding scenario in a targeted manner, promote fast iteration and maturation of the lane change algorithm, and resolve an efficient evaluation problem of an advanced efficient lane change capacity in the autonomous driving field.

S7: Explore a capability of the algorithm and collect data in a targeted manner. Based on the efficient lane change capability score and the detailed performance evaluation report that are output, capability boundaries of the reinforcement learning-based lane change algorithm of the autonomous driving system, and advantages and disadvantages of performance of various versions can be accurately and quantitatively evaluated, to distinguish subtle differences between the algorithms; and an efficient lane change capability profile can be drawn to show iterative evolution process of each version. In addition, simulated data of a lane change failure scenario and a long-time low-speed suppression scenario is extracted in a targeted manner based on a detailed evaluation report of the reinforcement learning-based lane change algorithm of the autonomous driving system in a high-speed dense traffic flow scenario in this example. For example, the reinforcement learning-based lane change algorithm has an insufficient lane change capability in scenarios such as continuous fast vehicle flow, a road topology change, and long-time low-speed suppression. The reason is that there is too little data of such scenarios in training data of the reinforcement learning-based lane change algorithm, resulting in insufficient network training. In view of this, the scenario data extracted in a targeted manner may be added to a training data set of the reinforcement learning-based lane change algorithm for retraining, to improve performance of the reinforcement learning-based lane change algorithm in the foregoing scenarios. In other words, the forward/reverse lane change data of the corresponding scenario can be extracted in a targeted manner for performance analysis of the lane change algorithm and data training/test of data-driven algorithms, to improve version iteration efficiency.

This solution is applicable to simulation systems, real-time road tests, and offline road test data playback, without restrictions on road scenarios and generation modes of efficient lane change behaviors. A high-rate simulation platform can be used to set rich scenarios and traffic flow, to greatly improve evaluation efficiency. Stability of different lane change algorithms in extreme scenarios is explored, to effectively reduce dependency on road tests. In addition, this solution has good scenario generalization and strong universality, and can be used for automatic evaluation and scoring, version iteration evolution, and key problem capture of lane change algorithms based on an expert system, reinforcement learning, and supervised learning in an offline or online manner.

It should be noted that, in various embodiments of this application, unless otherwise stated or there is a logic conflict, terms and/or descriptions in various embodiments are consistent and may be mutually referenced, and technical features in different embodiments may be combined based on an internal logical relationship thereof, to form a new embodiment.

The foregoing describes in detail the methods in embodiments of this application. The following provides apparatuses in embodiments of this application. It may be understood that, in the apparatus embodiments of this application, division into a plurality of units or modules is merely logical division based on functions, and is not intended to limit a specific structure of the apparatus. During specific implementation, some functional modules may be subdivided into more functional modules that are smaller, and some functional modules may also be combined into one functional module. However, regardless of whether these functional modules are subdivided or combined, a general procedure performed by the apparatus is the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

An embodiment of this application further provides an apparatus configured to implement any one of the foregoing methods. For example, an apparatus for evaluating an efficient lane change capability is provided, including modules (or means) configured to implement steps performed by a server in any one of the foregoing methods.

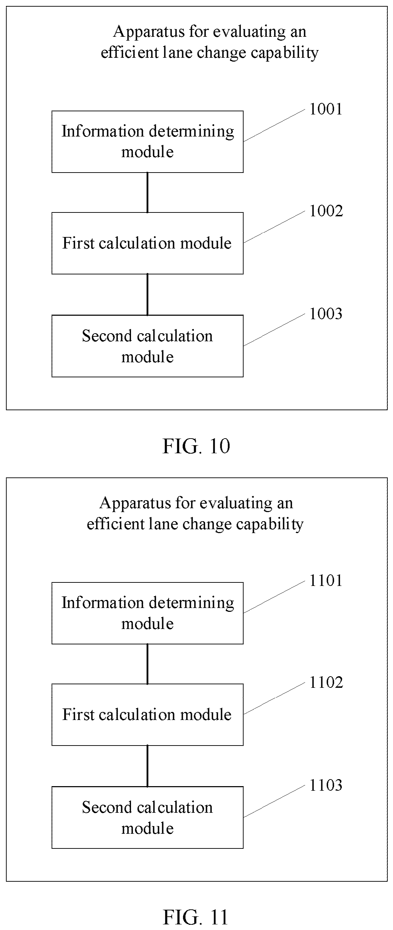

For example, FIG. 10 is a diagram of a structure of an apparatus for evaluating an efficient lane change capability according to an embodiment of this application. The apparatus for evaluating an efficient lane change capability is configured to implement the foregoing method for evaluating an efficient lane change capability, for example, the methods for evaluating an efficient lane change capability shown in FIG. 2 and FIG. 5.

As shown in FIG. 10, the apparatus may include an information determining module 1001, a first calculation module 1002, and a second calculation module 1003, which are specifically as follows:

The information determining module 1001 is configured to determine traveling status information of a vehicle and traffic scenario information in a pending evaluation time period based on a vehicle traveling trajectory, a lane change decision instruction, road scenario information, and a real-time traffic flow status.

The first calculation module 1002 is configured to calculate, in each lane change time period of the pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period.

The second calculation module, 1003 is configured to calculate an efficient lane change capability score based on a lane change effectiveness evaluation value in the pending evaluation time period, where the lane change effectiveness evaluation value in the pending evaluation time period is obtained based on the lane change effectiveness evaluation value corresponding to the completed lane change behavior in each lane change time period.

In a possible implementation, the first calculation module 1002 is configured to:
calculate, based on the traveling status information of the vehicle, the traffic scenario information, and the lane change intention corresponding to the lane change decision instruction, a lane change timing evaluation value corresponding to the completed lane change behavior in each lane change time period;
calculate, based on the traveling status information of the vehicle, the traffic scenario information, and the lane change intention execution result, an actual gain obtained from the completed lane change behavior in each lane change time period; and
calculate, based on at least one of the lane change timing evaluation value corresponding to the completed lane change behavior in each lane change time period and the actual gain obtained from the completed lane change behavior in each lane change time period, the lane change effectiveness evaluation value corresponding to the completed lane change behavior in each lane change time period.

In a possible implementation, the first calculation module 1002 is further configured to:
calculate, based on the traveling status information of the vehicle, the traffic scenario information, the lane change intention execution result, and respective traveling statuses of a first reference vehicle and a second reference vehicle at a lane change end moment, the actual gain obtained by the vehicle from the completed lane change behavior in each lane change time period, where the first reference vehicle includes sequential preceding and trailing vehicles of the vehicle at a lane change start moment, and the second reference vehicle includes sequential preceding and trailing vehicles of the vehicle at the lane change end moment.

In a possible implementation, the apparatus further includes a third calculation module, configured to:
determine a proportion of effective lane changes in the pending evaluation time period based on a quantity and directions of all completed lane change behaviors in the pending evaluation time period, and an actual gain obtained; and
calculate the lane change effectiveness evaluation value in the pending evaluation time period based on the proportion of effective lane changes and the lane change effectiveness evaluation value corresponding to the completed lane change behavior in each lane change time period.

In a possible implementation, the efficient lane change capability score is obtained based on the lane change effectiveness evaluation value and at least one of an overall lane change efficiency evaluation value, a suppression loss evaluation value, an atypical lane change evaluation value, a topology constraint evaluation value, and a traffic scenario evaluation value in the pending evaluation time period.

The overall lane change efficiency evaluation value represents an average traveling speed and a lane change execution frequency of the vehicle in the pending evaluation time period. The suppression loss evaluation value represents a loss value corresponding to a non-lane-change behavior of the vehicle. The atypical lane change evaluation value includes an evaluation value corresponding to at least one of a lane change intention jump, a lane change failure, back-and-forth lane changes, and consecutive lane changes in a same direction. The topology constraint evaluation value represents an evaluation value corresponding to at least one of a lane change in violation of a traffic regulation and a lane change that results in a departure from a navigation lane. The traffic scenario evaluation value represents an evaluation value corresponding to the traffic scenario information.

In a possible implementation, the pending evaluation time period further includes a non-lane-change time period; and the apparatus further includes a fourth calculation module, configured to:
calculate, in each non-lane-change time period of the pending evaluation time period based on the traveling status information of the vehicle and the traffic scenario information, a suppression loss evaluation value generated due to non-execution of a lane change action in each non-lane-change time period; and
obtain the suppression loss evaluation value in the pending evaluation time period based on the suppression loss evaluation value generated due to non-execution of the lane change action in each non-lane-change time period.

In a possible implementation, the fourth calculation module is further configured to:
obtain, through calculation, a suppression loss value of the vehicle in each non-lane-change time period based on the traveling status information of the vehicle, the traffic scenario information, and traveling status information of a third reference vehicle and a fourth reference vehicle, where the third reference vehicle includes sequential preceding and trailing vehicles of the vehicle in a first reference lane, the first reference lane is a lane in which the vehicle is located, the fourth reference vehicle includes sequential preceding and trailing vehicles relative to a position that is in a second reference lane and that corresponds to the vehicle, the second reference lane is a lane to which the vehicle is changeable, and the corresponding position is a position that is in the second reference lane and that corresponds to a position of the vehicle;
calculate a long-time suppression loss value in each non-lane-change time period based on the suppression loss value in each non-lane-change time period and duration of each non-lane-change time period of the pending evaluation time period;
calculate a proportion of suppression duration in each non-lane-change time period based on the duration of each non-lane-change time period, a control frequency of the lane change decision instruction, and the suppression loss value, where the proportion of suppression duration represents a conservative degree of a lane change; and
calculate, based on at least one of the suppression loss value in each non-lane-change time period, the long-time suppression loss value, and the proportion of suppression duration, the suppression loss evaluation value generated due to non-execution of the lane change action in each non-lane-change time period.

In a possible implementation, the fourth calculation module is further configured to:
obtain a proportion of suppression duration in the pending evaluation time period based on the proportion of suppression duration in each non-lane-change time period; and
calculate the suppression loss evaluation value in the pending evaluation time period based on the suppression loss evaluation value generated due to non-execution of the lane change action in each non-lane-change time period and the proportion of suppression duration in the pending evaluation time period.

In a possible implementation, the apparatus further includes a fifth calculation module, configured to:
determine an atypical lane change evaluation value in each lane change time period of the pending evaluation time period based on the traveling status information of the vehicle, the lane change intention corresponding to the lane change decision instruction, lane change behavior information that no lane change action is generated or a lane change action exists but is not completed corresponding to the lane change intention execution result, information that two consecutive lane change behaviors in the pending evaluation time period are in a same direction or in opposite directions, and information about a time interval and/or a distance interval between the two consecutive lane change behaviors.

In a possible implementation, the apparatus further includes a sixth calculation module, configured to:
calculate the overall lane change efficiency evaluation value based on a total traveling distance, total traveling time, and a total quantity of lane changes of the vehicle in a total lane change time period of the pending evaluation time period.

In a possible implementation, the apparatus further includes a seventh calculation module, configured to:
calculate the topology constraint evaluation value based on at least one of information that the vehicle departs from a navigation lane, information about a lane change across a solid line, and information about occupation of a dedicated lane.

For descriptions of the foregoing modules, refer to the descriptions of the foregoing embodiments. Details are not described herein again.

For another example, FIG. 11 is a diagram of a structure of another apparatus for evaluating an efficient lane change capability according to an embodiment of this application. The apparatus for evaluating an efficient lane change capability is configured to implement the foregoing method for evaluating an efficient lane change capability, for example, the methods for evaluating an efficient lane change capability shown in FIG. 2 and FIG. 5.

As shown in FIG. 11, the apparatus may include an information determining module 1101, a first calculation module 1102, and a second calculation module 1103, which are specifically as follows:

The information determining module 1101 is configured to determine traveling status information of a vehicle and traffic scenario information in a pending evaluation time period based on a vehicle traveling trajectory, a lane change decision instruction, road scenario information, and a real-time traffic flow status.

The first calculation module 1102 is configured to calculate, in each non-lane-change time period of the pending evaluation time period based on the traveling status information of the vehicle and the traffic scenario information, a suppression loss evaluation value generated due to non-execution of a lane change action in each non-lane-change time period, where the suppression loss evaluation value represents a loss value corresponding to a non-lane-change behavior of the vehicle.

The second calculation module 1103 is configured to calculate an efficient lane change capability score based on a suppression loss evaluation value in the pending evaluation time period, where the suppression loss evaluation value in the pending evaluation time period is obtained based on the suppression loss evaluation value generated due to non-execution of the lane change action in each non-lane-change time period.

In a possible implementation, the first calculation module 1102 is configured to:
obtain, through calculation, a suppression loss value of the vehicle in each non-lane-change time period based on the traveling status information of the vehicle, the traffic scenario information, and traveling status information of a third reference vehicle and a fourth reference vehicle, where the third reference vehicle includes sequential preceding and trailing vehicles of the vehicle in a first reference lane, the first reference lane is a lane in which the vehicle is located, the fourth reference vehicle includes sequential preceding and trailing vehicles relative to a position that is in a second reference lane and that corresponds to the vehicle, the second reference lane is a lane to which the vehicle is changeable, and the corresponding position is a position that is in the second reference lane and that corresponds to a position of the vehicle;
calculate a long-time suppression loss value in each non-lane-change time period based on the suppression loss value in each non-lane-change time period and duration of each non-lane-change time period of the pending evaluation time period;
calculate a proportion of suppression duration in each non-lane-change time period based on the duration of each non-lane-change time period, a control frequency of the lane change decision instruction, and the suppression loss value, where the proportion of suppression duration represents a conservative degree of a lane change; and
calculate, based on at least one of the suppression loss value in each non-lane-change time period, the long-time suppression loss value, and the proportion of suppression duration, the suppression loss evaluation value generated due to non-execution of the lane change action in each non-lane-change time period.

In a possible implementation, the apparatus further includes a third calculation module, configured to:
obtain a proportion of suppression duration in the pending evaluation time period based on the proportion of suppression duration in each non-lane-change time period; and
calculate the suppression loss evaluation value in the pending evaluation time period based on the suppression loss evaluation value generated due to non-execution of the lane change action in each non-lane-change time period and the proportion of suppression duration in the pending evaluation time period.

In a possible implementation, the efficient lane change capability score is obtained based on the suppression loss evaluation value and at least one of an overall lane change efficiency evaluation value, a lane change effectiveness evaluation value, an atypical lane change evaluation value, a topology constraint evaluation value, and a traffic scenario evaluation value in the pending evaluation time period.

The overall lane change efficiency evaluation value represents an average traveling speed and a lane change execution frequency of the vehicle in the pending evaluation time period. The atypical lane change evaluation value includes an evaluation value corresponding to at least one of a lane change intention jump, a lane change failure, back-and-forth lane changes, and consecutive lane changes in a same direction. The topology constraint evaluation value represents an evaluation value corresponding to at least one of a lane change in violation of a traffic regulation and a lane change that results in a departure from a navigation lane. The traffic scenario evaluation value represents an evaluation value corresponding to the traffic scenario information.

In a possible implementation, the pending evaluation time period further includes each lane change time period, and the apparatus further includes a fourth calculation module, configured to:
calculate, in each lane change time period of the pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period; and
obtain a lane change effectiveness evaluation value in the pending evaluation time period based on the lane change effectiveness evaluation value corresponding to the completed lane change behavior in each lane change time period.

In a possible implementation, the fourth calculation module is further configured to:
calculate, based on the traveling status information of the vehicle, the traffic scenario information, and the lane change intention corresponding to the lane change decision instruction, a lane change timing evaluation value corresponding to the completed lane change behavior in each lane change time period;
calculate, based on the traveling status information of the vehicle, the traffic scenario information, and the lane change intention execution result, an actual gain obtained from the completed lane change behavior in each lane change time period; and
calculate, based on at least one of the lane change timing evaluation value corresponding to the completed lane change behavior in each lane change time period and the actual gain obtained from the completed lane change behavior in each lane change time period, the lane change effectiveness evaluation value corresponding to the completed lane change behavior in each lane change time period.

In a possible implementation, the fourth calculation module is further configured to:
calculate, based on the traveling status information of the vehicle, the traffic scenario information, the lane change intention execution result, and respective traveling statuses of a first reference vehicle and a second reference vehicle at a lane change end moment, the actual gain obtained by the vehicle from the completed lane change behavior in each lane change time period, where the first reference vehicle includes sequential preceding and trailing vehicles of the vehicle at a lane change start moment, and the second reference vehicle includes sequential preceding and trailing vehicles of the vehicle at the lane change end moment.

In a possible implementation, the fourth calculation module is further configured to:
determine a proportion of effective lane changes in the pending evaluation time period based on a quantity and directions of all completed lane change behaviors in the pending evaluation time period, and an actual gain obtained; and
calculate the lane change effectiveness evaluation value in the pending evaluation time period based on the proportion of effective lane changes and the lane change effectiveness evaluation value corresponding to the completed lane change behavior in each lane change time period.

In a possible implementation, the apparatus further includes a fifth calculation module, configured to:
determine an atypical lane change evaluation value in each lane change time period of the pending evaluation time period based on the traveling status information of the vehicle, the lane change intention corresponding to the lane change decision instruction, lane change behavior information that no lane change action is generated or a lane change action exists but is not completed corresponding to the lane change intention execution result, information that two consecutive lane change behaviors in the pending evaluation time period are in a same direction or in opposite directions, and information about a time interval and/or a distance interval between the two consecutive lane change behaviors.

In a possible implementation, the apparatus further includes a sixth calculation module, configured to:
calculate the overall lane change efficiency evaluation value based on a total traveling distance, total traveling time, and a total quantity of lane changes of the vehicle in a total lane change time period of the pending evaluation time period.

In a possible implementation, the apparatus further includes a seventh calculation module, configured to:
calculate the topology constraint evaluation value based on at least one of information that the vehicle departs from a navigation lane, information about a lane change across a solid line, and information about occupation of a dedicated lane.

For descriptions of the foregoing modules, refer to the descriptions of the foregoing embodiments. Details are not described herein again.

It should be understood that division into the modules in the foregoing apparatuses is merely logical function division. During actual implementation, all or a part of the modules may be integrated into one physical entity, or may be physically separated. In addition, the module in the apparatus for evaluating an efficient lane change capability may be implemented in a form of software invoked by a processor. For example, the apparatus for evaluating an efficient lane change capability includes a processor. The processor is connected to a memory. The memory stores instructions, and the processor invokes the instructions stored in the memory, to implement any one of the foregoing methods or functions of each module in the apparatus. The processor is, for example, a general-purpose processor, for example, a central processing unit (central processing unit, CPU) or a microprocessor. The memory is a memory inside the apparatus or a memory outside the apparatus. Alternatively, the module in the apparatus may be implemented in a form of a hardware circuit, and functions of a part or all of units may be implemented by designing the hardware circuits. The hardware circuits may be understood as one or more processors. For example, in an implementation, the hardware circuit is an application-specific integrated circuit (application-specific integrated circuit, ASIC), and the functions of a part or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits. A configuration file is used to configure a connection relationship between logic gate circuits, to implement functions of a part or all of the foregoing units. All modules of the foregoing apparatuses may be implemented in a form of software invoked by the processor, or all modules may be implemented in a form of the hardware circuit, or some modules may be implemented in a form of software invoked by the processor, and a remaining part may be implemented in a form of the hardware circuit.

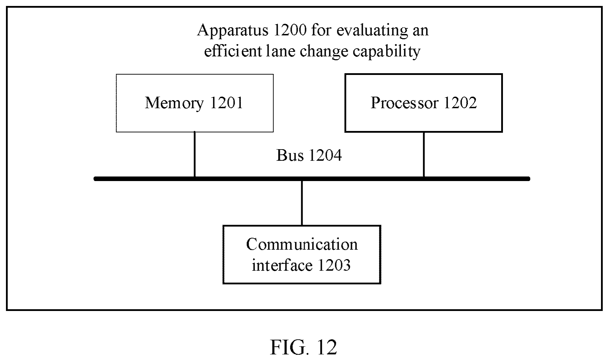

FIG. 12 is a diagram of a hardware structure of still another apparatus for evaluating an efficient lane change capability according to an embodiment of this application. The apparatus 1200 for evaluating an efficient lane change capability shown in FIG. 12 includes a memory 1201, a processor 1202, a communication interface 1203, and a bus 1204 (the apparatus 1200 may be specifically a computer device). The memory 1201, the processor 1202, and the communication interface 1203 are connected to each other through the bus 1204.

The memory 1201 may be a read-only memory (read-only memory, ROM), a static storage device, a dynamic storage device, or a random access memory (random access memory, RAM).

The memory 1201 may store a program. When the program stored in the memory 1201 is executed by the processor 1202, the processor 1202 and the communication interface 1203 are configured to perform the steps of the method for evaluating an efficient lane change capability in embodiments of this application.

The processor 1202 is a circuit with a signal processing capability. In an implementation, the processor 1202 may be a circuit with an instruction reading and running capability, for example, a central processing unit CPU, a microprocessor, a graphics processing unit (graphics processing unit, GPU) (which may be understood as a microprocessor), or a digital signal processor (digital signal processor, DSP). In another implementation, the processor 1202 may implement a specific function based on a logical relationship of a hardware circuit, and the logical relationship of the hardware circuit is fixed or reconfigurable. For example, the processor 1202 is a hardware circuit implemented by an ASIC or a programmable logic device PLD, for example, an FPGA. In the reconfigurable hardware circuit, a process in which the processor loads a configuration document to implement hardware circuit configuration may be understood as a process in which the processor loads an instruction to implement functions of a part or all of the foregoing modules. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). The processor 1202 is configured to execute a related program, to implement a function that needs to be performed by a unit in the apparatus for evaluating an efficient lane change capability in embodiments of this application, or perform the method for evaluating an efficient lane change capability in the method embodiments of this application.

It can be learned that each module in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or a part of the modules of the apparatus may be integrated, or may be implemented independently. In an implementation, the modules may be integrated together and implemented in a form of a system-on-a-chip (system-on-a-chip, SOC). The SOC may include at least one processor, configured to implement any one of the methods or implement functions of the modules of the apparatus. Types of the at least one processor may be different, for example, the at least one processor includes a CPU and an FPGA, a CPU and an artificial intelligence processor, or a CPU and a GPU.

The communication interface 1203 uses a transceiver apparatus, for example but not limited to, a transceiver, to implement communication between the apparatus 1200 and another device or a communication network. For example, data may be obtained through the communication interface 1203.

The bus 1204 may include a channel through which information is transmitted between parts (for example, the memory 1201, the processor 1202, and the communication interface 1203) of the apparatus 1200.

It should be noted that although the apparatus 1200 shown in FIG. 12 only shows the memory, the processor, and the communication interface, in a specific implementation process, a person skilled in the art should understand that the apparatus 1200 further includes other components that are necessary to implement normal running. In addition, based on a specific requirement, a person skilled in the art should understand that the apparatus 1200 may further include hardware components for implementing other additional functions. In addition, a person skilled in the art should understand that the apparatus 1200 may alternatively include only a component required for implementing embodiments of this application, and does not need to include all components shown in FIG. 12.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be another division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part or all of the units may be selected based on actual requirements to achieve the objectives of the solutions of embodiments.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center that integrates one or more usable media. The usable medium may be a read-only memory (read-only memory, ROM), a random access memory (random access memory, RAM), or a magnetic medium, for example, a floppy disk, a hard disk drive, a magnetic tape, a magnetic disk, or an optical medium, for example, a digital versatile disc (digital versatile disc, DVD), or a semiconductor medium, for example, a solid-state drive (solid-state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A method for evaluating an efficient lane change capability, comprising:
determining traveling status information of a vehicle and traffic scenario information in a pending evaluation time period based on a vehicle traveling trajectory, a lane change decision instruction, road scenario information, and a real-time traffic flow status;
calculating, in each lane change time period of the pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period; and
calculating an efficient lane change capability score based on a lane change effectiveness evaluation value in the pending evaluation time period, wherein the lane change effectiveness evaluation value in the pending evaluation time period is obtained based on the lane change effectiveness evaluation value corresponding to the completed lane change behavior in each lane change time period.

2. The method according to claim 1, wherein the calculating, based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period comprises:
calculating, based on the traveling status information of the vehicle, the traffic scenario information, and the lane change intention corresponding to the lane change decision instruction, a lane change timing evaluation value corresponding to the completed lane change behavior in each lane change time period;
calculating, based on the traveling status information of the vehicle, the traffic scenario information, and the lane change intention execution result, an actual gain obtained from the completed lane change behavior in each lane change time period; and
calculating, based on at least one of the lane change timing evaluation value corresponding to the completed lane change behavior in each lane change time period and the actual gain obtained from the completed lane change behavior in each lane change time period, the lane change effectiveness evaluation value corresponding to the completed lane change behavior in each lane change time period.

3. The method according to claim 2, wherein the calculating, based on the traveling status information of the vehicle, the traffic scenario information, and the lane change intention execution result, an actual gain obtained from the completed lane change behavior in each lane change time period comprises:
calculating, based on the traveling status information of the vehicle, the traffic scenario information, the lane change intention execution result, and respective traveling statuses of a first reference vehicle and a second reference vehicle at a lane change end moment, the actual gain obtained by the vehicle from the completed lane change behavior in each lane change time period, wherein the first reference vehicle comprises sequential preceding and trailing vehicles of the vehicle at a lane change start moment, and the second reference vehicle comprises sequential preceding and trailing vehicles of the vehicle at the lane change end moment.

4. The method according to claim 2 or 3, wherein the method further comprises:
determining a proportion of effective lane changes in the pending evaluation time period based on a quantity and directions of all completed lane change behaviors in the pending evaluation time period, and an actual gain obtained; and
calculating the lane change effectiveness evaluation value in the pending evaluation time period based on the proportion of effective lane changes and the lane change effectiveness evaluation value corresponding to the completed lane change behavior in each lane change time period.

5. The method according to any one of claims 1 to 4, wherein the efficient lane change capability score is obtained based on the lane change effectiveness evaluation value and at least one of an overall lane change efficiency evaluation value, a suppression loss evaluation value, an atypical lane change evaluation value, a topology constraint evaluation value, and a traffic scenario evaluation value in the pending evaluation time period, wherein
the overall lane change efficiency evaluation value represents an average traveling speed and a lane change execution frequency of the vehicle in the pending evaluation time period; the suppression loss evaluation value represents a loss value corresponding to a non-lane-change behavior of the vehicle; the atypical lane change evaluation value comprises an evaluation value corresponding to at least one of a lane change intention jump, a lane change failure, back-and-forth lane changes, and consecutive lane changes in a same direction; the topology constraint evaluation value represents an evaluation value corresponding to at least one of a lane change in violation of a traffic regulation and a lane change that results in a departure from a navigation lane; and the traffic scenario evaluation value represents an evaluation value corresponding to the traffic scenario information.

6. The method according to claim 5, wherein the pending evaluation time period further comprises a non-lane-change time period; and the method further comprises:
calculating, in each non-lane-change time period of the pending evaluation time period based on the traveling status information of the vehicle and the traffic scenario information, a suppression loss evaluation value generated due to non-execution of a lane change action in each non-lane-change time period; and
obtaining the suppression loss evaluation value in the pending evaluation time period based on the suppression loss evaluation value generated due to non-execution of the lane change action in each non-lane-change time period.

7. The method according to claim 6, wherein the calculating, based on the traveling status information of the vehicle and the traffic scenario information, a suppression loss evaluation value generated due to non-execution of a lane change action in each non-lane-change time period comprises:
obtaining, through calculation, a suppression loss value of the vehicle in each non-lane-change time period based on the traveling status information of the vehicle, the traffic scenario information, and traveling status information of a third reference vehicle and a fourth reference vehicle, wherein the third reference vehicle comprises sequential preceding and trailing vehicles of the vehicle in a first reference lane, the first reference lane is a lane in which the vehicle is located, the fourth reference vehicle comprises sequential preceding and trailing vehicles relative to a position that is in a second reference lane and that corresponds to the vehicle, the second reference lane is a lane to which the vehicle is changeable, and the corresponding position is a position that is in the second reference lane and that corresponds to a position of the vehicle;
calculating a long-time suppression loss value in each non-lane-change time period based on the suppression loss value in each non-lane-change time period and duration of each non-lane-change time period of the pending evaluation time period;
calculating a proportion of suppression duration in each non-lane-change time period based on the duration of each non-lane-change time period, a control frequency of the lane change decision instruction, and the suppression loss value, wherein the proportion of suppression duration represents a conservative degree of a lane change; and
calculating, based on at least one of the suppression loss value in each non-lane-change time period, the long-time suppression loss value, and the proportion of suppression duration, the suppression loss evaluation value generated due to non-execution of the lane change action in each non-lane-change time period.

8. The method according to claim 7, wherein the obtaining the suppression loss evaluation value in the pending evaluation time period based on the suppression loss evaluation value generated due to non-execution of the lane change action in each non-lane-change time period comprises:
obtaining a proportion of suppression duration in the pending evaluation time period based on the proportion of suppression duration in each non-lane-change time period; and
calculating the suppression loss evaluation value in the pending evaluation time period based on the suppression loss evaluation value generated due to non-execution of the lane change action in each non-lane-change time period and the proportion of suppression duration in the pending evaluation time period.

9. The method according to any one of claims 5 to 8, wherein the method further comprises:
determining an atypical lane change evaluation value in each lane change time period of the pending evaluation time period based on the traveling status information of the vehicle, the lane change intention corresponding to the lane change decision instruction, lane change behavior information that no lane change action is generated or a lane change action exists but is not completed corresponding to the lane change intention execution result, information that two consecutive lane change behaviors in the pending evaluation time period are in a same direction or in opposite directions, and information about a time interval and/or a distance interval between the two consecutive lane change behaviors.

10. The method according to any one of claims 5 to 9, wherein the method further comprises:
calculating the overall lane change efficiency evaluation value based on a total traveling distance, total traveling time, and a total quantity of lane changes of the vehicle in a total lane change time period of the pending evaluation time period.

11. The method according to any one of claims 5 to 10, wherein the method further comprises:
calculating the topology constraint evaluation value based on at least one of information that the vehicle departs from a navigation lane, information about a lane change across a solid line, and information about occupation of a dedicated lane.

12. A method for evaluating an efficient lane change capability, comprising:
determining traveling status information of a vehicle and traffic scenario information in a pending evaluation time period based on a vehicle traveling trajectory, a lane change decision instruction, road scenario information, and a real-time traffic flow status;
calculating, in each non-lane-change time period of the pending evaluation time period based on the traveling status information of the vehicle and the traffic scenario information, a suppression loss evaluation value generated due to non-execution of a lane change action in each non-lane-change time period, wherein the suppression loss evaluation value represents a loss value corresponding to a non-lane-change behavior of the vehicle; and
calculating an efficient lane change capability score based on a suppression loss evaluation value in the pending evaluation time period, wherein the suppression loss evaluation value in the pending evaluation time period is obtained based on the suppression loss evaluation value generated due to non-execution of the lane change action in each non-lane-change time period.

13. The method according to claim 12, wherein the calculating, based on the traveling status information of the vehicle and the traffic scenario information, a suppression loss evaluation value generated due to non-execution of a lane change action in each non-lane-change time period comprises:
obtaining, through calculation, a suppression loss value of the vehicle in each non-lane-change time period based on the traveling status information of the vehicle, the traffic scenario information, and traveling status information of a third reference vehicle and a fourth reference vehicle, wherein the third reference vehicle comprises sequential preceding and trailing vehicles of the vehicle in a first reference lane, the first reference lane is a lane in which the vehicle is located, the fourth reference vehicle comprises sequential preceding and trailing vehicles relative to a position that is in a second reference lane and that corresponds to the vehicle, the second reference lane is a lane to which the vehicle is changeable, and the corresponding position is a position that is in the second reference lane and that corresponds to a position of the vehicle;
calculating a long-time suppression loss value in each non-lane-change time period based on the suppression loss value in each non-lane-change time period and duration of each non-lane-change time period of the pending evaluation time period;
calculating a proportion of suppression duration in each non-lane-change time period based on the duration of each non-lane-change time period, a control frequency of the lane change decision instruction, and the suppression loss value, wherein the proportion of suppression duration represents a conservative degree of a lane change; and
calculating, based on at least one of the suppression loss value in each non-lane-change time period, the long-time suppression loss value, and the proportion of suppression duration, the suppression loss evaluation value generated due to non-execution of the lane change action in each non-lane-change time period.

14. The method according to claim 13, wherein the method further comprises:
obtaining a proportion of suppression duration in the pending evaluation time period based on the proportion of suppression duration in each non-lane-change time period; and
calculating the suppression loss evaluation value in the pending evaluation time period based on the suppression loss evaluation value generated due to non-execution of the lane change action in each non-lane-change time period and the proportion of suppression duration in the pending evaluation time period.

15. The method according to any one of claims 12 to 14, wherein the efficient lane change capability score is obtained based on the suppression loss evaluation value and at least one of an overall lane change efficiency evaluation value, a lane change effectiveness evaluation value, an atypical lane change evaluation value, a topology constraint evaluation value, and a traffic scenario evaluation value in the pending evaluation time period, wherein
the overall lane change efficiency evaluation value represents an average traveling speed and a lane change execution frequency of the vehicle in the pending evaluation time period; the atypical lane change evaluation value comprises an evaluation value corresponding to at least one of a lane change intention jump, a lane change failure, back-and-forth lane changes, and consecutive lane changes in a same direction; the topology constraint evaluation value represents an evaluation value corresponding to at least one of a lane change in violation of a traffic regulation and a lane change that results in a departure from a navigation lane; and the traffic scenario evaluation value represents an evaluation value corresponding to the traffic scenario information.

16. The method according to claim 15, wherein the pending evaluation time period further comprises each lane change time period; and the method further comprises:
calculating, in each lane change time period of the pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period; and
obtaining a lane change effectiveness evaluation value in the pending evaluation time period based on the lane change effectiveness evaluation value corresponding to the completed lane change behavior in each lane change time period.

17. The method according to claim 16, wherein the calculating, based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period comprises:
calculating, based on the traveling status information of the vehicle, the traffic scenario information, and the lane change intention corresponding to the lane change decision instruction, a lane change timing evaluation value corresponding to the completed lane change behavior in each lane change time period;
calculating, based on the traveling status information of the vehicle, the traffic scenario information, and the lane change intention execution result, an actual gain obtained from the completed lane change behavior in each lane change time period; and
calculating, based on at least one of the lane change timing evaluation value corresponding to the completed lane change behavior in each lane change time period and the actual gain obtained from the completed lane change behavior in each lane change time period, the lane change effectiveness evaluation value corresponding to the completed lane change behavior in each lane change time period.

18. The method according to claim 17, wherein the calculating, based on the traveling status information of the vehicle, the traffic scenario information, and the lane change intention execution result, an actual gain obtained from the completed lane change behavior in each lane change time period comprises:
calculating, based on the traveling status information of the vehicle, the traffic scenario information, the lane change intention execution result, and respective traveling statuses of a first reference vehicle and a second reference vehicle at a lane change end moment, the actual gain obtained by the vehicle from the completed lane change behavior in each lane change time period, wherein the first reference vehicle comprises sequential preceding and trailing vehicles of the vehicle at a lane change start moment, and the second reference vehicle comprises sequential preceding and trailing vehicles of the vehicle at the lane change end moment.

19. The method according to any one of claims 16 to 18, wherein the obtaining a lane change effectiveness evaluation value in the pending evaluation time period based on the lane change effectiveness evaluation value corresponding to the completed lane change behavior in each lane change time period comprises:
determining a proportion of effective lane changes in the pending evaluation time period based on a quantity and directions of all completed lane change behaviors in the pending evaluation time period, and an actual gain obtained; and
calculating the lane change effectiveness evaluation value in the pending evaluation time period based on the proportion of effective lane changes and the lane change effectiveness evaluation value corresponding to the completed lane change behavior in each lane change time period.

20. The method according to any one of claims 15 to 19, wherein the method further comprises:
determining an atypical lane change evaluation value in each lane change time period of the pending evaluation time period based on the traveling status information of the vehicle, the lane change intention corresponding to the lane change decision instruction, lane change behavior information that no lane change action is generated or a lane change action exists but is not completed corresponding to the lane change intention execution result, information that two consecutive lane change behaviors in the pending evaluation time period are in a same direction or in opposite directions, and information about a time interval and/or a distance interval between the two consecutive lane change behaviors.

21. The method according to any one of claims 15 to 20, wherein the method further comprises:
calculating the overall lane change efficiency evaluation value based on a total traveling distance, total traveling time, and a total quantity of lane changes of the vehicle in a total lane change time period of the pending evaluation time period.

22. The method according to any one of claims 15 to 21, wherein the method further comprises:
calculating the topology constraint evaluation value based on at least one of information that the vehicle departs from a navigation lane, information about a lane change across a solid line, and information about occupation of a dedicated lane.

23. An apparatus for evaluating an efficient lane change capability, comprising:
an information determining module, configured to determine traveling status information of a vehicle and traffic scenario information in a pending evaluation time period based on a vehicle traveling trajectory, a lane change decision instruction, road scenario information, and a real-time traffic flow status;
a first calculation module, configured to calculate, in each lane change time period of the pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period; and
a second calculation module, configured to calculate an efficient lane change capability score based on a lane change effectiveness evaluation value in the pending evaluation time period, wherein the lane change effectiveness evaluation value in the pending evaluation time period is obtained based on the lane change effectiveness evaluation value corresponding to the completed lane change behavior in each lane change time period.

24. The apparatus according to claim 23, wherein the first calculation module is configured to:
calculate, based on the traveling status information of the vehicle, the traffic scenario information, and the lane change intention corresponding to the lane change decision instruction, a lane change timing evaluation value corresponding to the completed lane change behavior in each lane change time period;
calculate, based on the traveling status information of the vehicle, the traffic scenario information, and the lane change intention execution result, an actual gain obtained from the completed lane change behavior in each lane change time period; and
calculate, based on at least one of the lane change timing evaluation value corresponding to the completed lane change behavior in each lane change time period and the actual gain obtained from the completed lane change behavior in each lane change time period, the lane change effectiveness evaluation value corresponding to the completed lane change behavior in each lane change time period.

25. The apparatus according to claim 24, wherein the first calculation module is further configured to:
calculate, based on the traveling status information of the vehicle, the traffic scenario information, the lane change intention execution result, and respective traveling statuses of a first reference vehicle and a second reference vehicle at a lane change end moment, the actual gain obtained by the vehicle from the completed lane change behavior in each lane change time period, wherein the first reference vehicle comprises sequential preceding and trailing vehicles of the vehicle at a lane change start moment, and the second reference vehicle comprises sequential preceding and trailing vehicles of the vehicle at the lane change end moment.

26. The apparatus according to claim 24 or 25, wherein the apparatus further comprises a third calculation module, configured to:
determine a proportion of effective lane changes in the pending evaluation time period based on a quantity and directions of all completed lane change behaviors in the pending evaluation time period, and an actual gain obtained; and
calculate the lane change effectiveness evaluation value in the pending evaluation time period based on the proportion of effective lane changes and the lane change effectiveness evaluation value corresponding to the completed lane change behavior in each lane change time period.

27. The apparatus according to any one of claims 23 to 26, wherein the efficient lane change capability score is obtained based on the lane change effectiveness evaluation value and at least one of an overall lane change efficiency evaluation value, a suppression loss evaluation value, an atypical lane change evaluation value, a topology constraint evaluation value, and a traffic scenario evaluation value in the pending evaluation time period, wherein
the overall lane change efficiency evaluation value represents an average traveling speed and a lane change execution frequency of the vehicle in the pending evaluation time period; the suppression loss evaluation value represents a loss value corresponding to a non-lane-change behavior of the vehicle; the atypical lane change evaluation value comprises an evaluation value corresponding to at least one of a lane change intention jump, a lane change failure, back-and-forth lane changes, and consecutive lane changes in a same direction; the topology constraint evaluation value represents an evaluation value corresponding to at least one of a lane change in violation of a traffic regulation and a lane change that results in a departure from a navigation lane; and the traffic scenario evaluation value represents an evaluation value corresponding to the traffic scenario information.

28. The apparatus according to claim 27, wherein the pending evaluation time period further comprises a non-lane-change time period; and the apparatus further comprises a fourth calculation module, configured to:
calculate, in each non-lane-change time period of the pending evaluation time period based on the traveling status information of the vehicle and the traffic scenario information, a suppression loss evaluation value generated due to non-execution of a lane change action in each non-lane-change time period; and
obtain the suppression loss evaluation value in the pending evaluation time period based on the suppression loss evaluation value generated due to non-execution of the lane change action in each non-lane-change time period.

29. The apparatus according to claim 28, wherein the fourth calculation module is further configured to:
obtain, through calculation, a suppression loss value of the vehicle in each non-lane-change time period based on the traveling status information of the vehicle, the traffic scenario information, and traveling status information of a third reference vehicle and a fourth reference vehicle, wherein the third reference vehicle comprises sequential preceding and trailing vehicles of the vehicle in a first reference lane, the first reference lane is a lane in which the vehicle is located, the fourth reference vehicle comprises sequential preceding and trailing vehicles relative to a position that is in a second reference lane and that corresponds to the vehicle, the second reference lane is a lane to which the vehicle is changeable, and the corresponding position is a position that is in the second reference lane and that corresponds to a position of the vehicle;
calculate a long-time suppression loss value in each non-lane-change time period based on the suppression loss value in each non-lane-change time period and duration of each non-lane-change time period of the pending evaluation time period;
calculate a proportion of suppression duration in each non-lane-change time period based on the duration of each non-lane-change time period, a control frequency of the lane change decision instruction, and the suppression loss value, wherein the proportion of suppression duration represents a conservative degree of a lane change; and
calculate, based on at least one of the suppression loss value in each non-lane-change time period, the long-time suppression loss value, and the proportion of suppression duration, the suppression loss evaluation value generated due to non-execution of the lane change action in each non-lane-change time period.

30. The apparatus according to claim 29, wherein the fourth calculation module is further configured to:
obtain a proportion of suppression duration in the pending evaluation time period based on the proportion of suppression duration in each non-lane-change time period; and
calculate the suppression loss evaluation value in the pending evaluation time period based on the suppression loss evaluation value generated due to non-execution of the lane change action in each non-lane-change time period and the proportion of suppression duration in the pending evaluation time period.

31. The apparatus according to any one of claims 27 to 30, wherein the apparatus further comprises a fifth calculation module, configured to:
determine an atypical lane change evaluation value in each lane change time period of the pending evaluation time period based on the traveling status information of the vehicle, the lane change intention corresponding to the lane change decision instruction, lane change behavior information that no lane change action is generated or a lane change action exists but is not completed corresponding to the lane change intention execution result, information that two consecutive lane change behaviors in the pending evaluation time period are in a same direction or in opposite directions, and information about a time interval and/or a distance interval between the two consecutive lane change behaviors.

32. The apparatus according to any one of claims 27 to 31, wherein the apparatus further comprises a sixth calculation module, configured to:
calculate the overall lane change efficiency evaluation value based on a total traveling distance, total traveling time, and a total quantity of lane changes of the vehicle in a total lane change time period of the pending evaluation time period.

33. The apparatus according to any one of claims 27 to 32, wherein the apparatus further comprises a seventh calculation module, configured to:
calculate the topology constraint evaluation value based on at least one of information that the vehicle departs from a navigation lane, information about a lane change across a solid line, and information about occupation of a dedicated lane.

34. An apparatus for evaluating an efficient lane change capability, comprising:
an information determining module, configured to determine traveling status information of a vehicle and traffic scenario information in a pending evaluation time period based on a vehicle traveling trajectory, a lane change decision instruction, road scenario information, and a real-time traffic flow status;
a first calculation module, configured to calculate, in each non-lane-change time period of the pending evaluation time period based on the traveling status information of the vehicle and the traffic scenario information, a suppression loss evaluation value generated due to non-execution of a lane change action in each non-lane-change time period, wherein the suppression loss evaluation value represents a loss value corresponding to a non-lane-change behavior of the vehicle; and
a second calculation module, configured to calculate an efficient lane change capability score based on a suppression loss evaluation value in the pending evaluation time period, wherein the suppression loss evaluation value in the pending evaluation time period is obtained based on the suppression loss evaluation value generated due to non-execution of the lane change action in each non-lane-change time period.

35. The apparatus according to claim 34, wherein the first calculation module is configured to:
obtain, through calculation, a suppression loss value of the vehicle in each non-lane-change time period based on the traveling status information of the vehicle, the traffic scenario information, and traveling status information of a third reference vehicle and a fourth reference vehicle, wherein the third reference vehicle comprises sequential preceding and trailing vehicles of the vehicle in a first reference lane, the first reference lane is a lane in which the vehicle is located, the fourth reference vehicle comprises sequential preceding and trailing vehicles relative to a position that is in a second reference lane and that corresponds to the vehicle, the second reference lane is a lane to which the vehicle is changeable, and the corresponding position is a position that is in the second reference lane and that corresponds to a position of the vehicle;
calculate a long-time suppression loss value in each non-lane-change time period based on the suppression loss value in each non-lane-change time period and duration of each non-lane-change time period of the pending evaluation time period;
calculate a proportion of suppression duration in each non-lane-change time period based on the duration of each non-lane-change time period, a control frequency of the lane change decision instruction, and the suppression loss value, wherein the proportion of suppression duration represents a conservative degree of a lane change; and
calculate, based on at least one of the suppression loss value in each non-lane-change time period, the long-time suppression loss value, and the proportion of suppression duration, the suppression loss evaluation value generated due to non-execution of the lane change action in each non-lane-change time period.

36. The apparatus according to claim 35, wherein the apparatus further comprises a third calculation module, configured to:
obtain a proportion of suppression duration in the pending evaluation time period based on the proportion of suppression duration in each non-lane-change time period; and
calculate the suppression loss evaluation value in the pending evaluation time period based on the suppression loss evaluation value generated due to non-execution of the lane change action in each non-lane-change time period and the proportion of suppression duration in the pending evaluation time period.

37. The apparatus according to any one of claims 34 to 36, wherein the efficient lane change capability score is obtained based on the suppression loss evaluation value and at least one of an overall lane change efficiency evaluation value, a lane change effectiveness evaluation value, an atypical lane change evaluation value, a topology constraint evaluation value, and a traffic scenario evaluation value in the pending evaluation time period, wherein
the overall lane change efficiency evaluation value represents an average traveling speed and a lane change execution frequency of the vehicle in the pending evaluation time period; the atypical lane change evaluation value comprises an evaluation value corresponding to at least one of a lane change intention jump, a lane change failure, back-and-forth lane changes, and consecutive lane changes in a same direction; the topology constraint evaluation value represents an evaluation value corresponding to at least one of a lane change in violation of a traffic regulation and a lane change that results in a departure from a navigation lane; and the traffic scenario evaluation value represents an evaluation value corresponding to the traffic scenario information.

38. The apparatus according to claim 37, wherein the pending evaluation time period further comprises each lane change time period, and the apparatus further comprises a fourth calculation module, configured to:
calculate, in each lane change time period of the pending evaluation time period based on the traveling status information of the vehicle, the traffic scenario information, a lane change intention corresponding to the lane change decision instruction, and a lane change intention execution result, a lane change effectiveness evaluation value corresponding to a completed lane change behavior in each lane change time period; and
obtain a lane change effectiveness evaluation value in the pending evaluation time period based on the lane change effectiveness evaluation value corresponding to the completed lane change behavior in each lane change time period.

39. The apparatus according to claim 38, wherein the fourth calculation module is further configured to:
calculate, based on the traveling status information of the vehicle, the traffic scenario information, and the lane change intention corresponding to the lane change decision instruction, a lane change timing evaluation value corresponding to the completed lane change behavior in each lane change time period;
calculate, based on the traveling status information of the vehicle, the traffic scenario information, and the lane change intention execution result, an actual gain obtained from the completed lane change behavior in each lane change time period; and
calculate, based on at least one of the lane change timing evaluation value corresponding to the completed lane change behavior in each lane change time period and the actual gain obtained from the completed lane change behavior in each lane change time period, the lane change effectiveness evaluation value corresponding to the completed lane change behavior in each lane change time period.

40. The apparatus according to claim 39, wherein the fourth calculation module is further configured to:
calculate, based on the traveling status information of the vehicle, the traffic scenario information, the lane change intention execution result, and respective traveling statuses of a first reference vehicle and a second reference vehicle at a lane change end moment, the actual gain obtained by the vehicle from the completed lane change behavior in each lane change time period, wherein the first reference vehicle comprises sequential preceding and trailing vehicles of the vehicle at a lane change start moment, and the second reference vehicle comprises sequential preceding and trailing vehicles of the vehicle at the lane change end moment.

41. The apparatus according to any one of claims 38 to 40, wherein the fourth calculation module is further configured to:
determine a proportion of effective lane changes in the pending evaluation time period based on a quantity and directions of all completed lane change behaviors in the pending evaluation time period, and an actual gain obtained; and
calculate the lane change effectiveness evaluation value in the pending evaluation time period based on the proportion of effective lane changes and the lane change effectiveness evaluation value corresponding to the completed lane change behavior in each lane change time period.

42. The apparatus according to any one of claims 37 to 41, wherein the apparatus further comprises a fifth calculation module, configured to:
determine an atypical lane change evaluation value in each lane change time period of the pending evaluation time period based on the traveling status information of the vehicle, the lane change intention corresponding to the lane change decision instruction, lane change behavior information that no lane change action is generated or a lane change action exists but is not completed corresponding to the lane change intention execution result, information that two consecutive lane change behaviors in the pending evaluation time period are in a same direction or in opposite directions, and information about a time interval and/or a distance interval between the two consecutive lane change behaviors.

43. The apparatus according to any one of claims 37 to 42, wherein the apparatus further comprises a sixth calculation module, configured to:
calculate the overall lane change efficiency evaluation value based on a total traveling distance, total traveling time, and a total quantity of lane changes of the vehicle in a total lane change time period of the pending evaluation time period.

44. The apparatus according to any one of claims 37 to 43, wherein the apparatus further comprises a seventh calculation module, configured to:
calculate the topology constraint evaluation value based on at least one of information that the vehicle departs from a navigation lane, information about a lane change across a solid line, and information about occupation of a dedicated lane.

45. An apparatus for evaluating an efficient lane change capability, comprising a processor and a memory, wherein the memory is configured to store program code, and the processor is configured to invoke the program code to perform the method according to any one of claims 1 to 11, or perform the method according to any one of claims 12 to 22.

46. A computer-readable storage medium, wherein the computer-readable storage medium stores a computer program, and the computer program is executed by a processor to implement the method according to any one of claims 1 to 11, or perform the method according to any one of claims 12 to 22.

47. A computer program product, wherein when the computer program product runs on a computer, the computer is enabled to perform the method according to any one of claims 1 to 11, or perform the method according to any one of claims 12 to 22.

48. A chip system, wherein the chip system is used in an electronic device, the chip system comprises one or more interface circuits and one or more processors, the interface circuit and the processor are interconnected through a line, the interface circuit is configured to: receive a signal from a memory of the electronic device, and send the signal to the processor, the signal comprises computer instructions stored in the memory, and when the processor executes the computer instructions, the electronic device performs the method according to any one of claims 1 to 11, or performs the method according to any one of claims 12 to 22.

49. An intelligent driving vehicle, comprising a travel system, a sensing system, a control system, and a computer system, wherein the computer system is used to perform the method according to any one of claims 1 to 11, or perform the method according to any one of claims 12 to 22.
